(19) Europäisches Patentamt
European Patent Office
Office européen des brevets

(11) EP 4 647 451 A1

(12) EUROPEAN PATENT APPLICATION
published in accordance with Art. 153(4) EPC

(43) Date of publication:
**12.11.2025 Bulletin 2025/46**

(21) Application number: **23914780.4**

(22) Date of filing: **21.12.2023**

(51) International Patent Classification (IPC):
***C08G 18/10*** $^{(2006.01)}$ ***C08G 18/12*** $^{(2006.01)}$
***C08G 18/32*** $^{(2006.01)}$ ***C08G 18/40*** $^{(2006.01)}$
***C08G 18/42*** $^{(2006.01)}$ ***C08G 18/73*** $^{(2006.01)}$
***C08G 18/75*** $^{(2006.01)}$ ***C08G 18/78*** $^{(2006.01)}$
***C09D 175/06*** $^{(2006.01)}$

(52) Cooperative Patent Classification (CPC):
**C08G 18/10; C08G 18/12; C08G 18/32; C08G 18/40; C08G 18/42; C08G 18/73; C08G 18/75; C08G 18/78; C09D 175/06**

(86) International application number:
**PCT/JP2023/045891**

(87) International publication number:
**WO 2024/147294 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.01.2023 JP 2023001167**
**06.01.2023 JP 2023001168**
**29.06.2023 JP 2023106875**

(71) Applicant: **Asahi Kasei Kabushiki Kaisha**
**Tokyo 100-0006 (JP)**

(72) Inventors:
- **TANAKA, Yoko**
  **Tokyo 100-0006 (JP)**
- **SAEDA, Kirara**
  **Tokyo 100-0006 (JP)**
- **TANAKA, Eiko**
  **Tokyo 100-0006 (JP)**

(74) Representative: **Strehl & Partner mbB**
**Maximilianstrasse 54**
**80538 München (DE)**

# (54) POLYISOCYANATE COMPOSITION, COATING MATERIAL COMPOSITION, AND COATING FILM

(57) The polyisocyanate composition contains a polyisocyanate component (Al) obtained from a diisocyanate selected from the group consisting of aliphatic diisocyanates and alicyclic diisocyanates and a polyester polyol having an average of two or three functional groups or a polyisocyanate component (A2) obtained from a diisocyanate selected from the group consisting of aliphatic diisocyanates and alicyclic diisocyanates and a polyester polyol having an average of two or three functional groups and a polyoxyalkylene polyol having an average of two to four functional groups and a polyisocyanate component (B) obtained from a diisocyanate selected from the group consisting of aliphatic diisocyanates and alicyclic diisocyanates and a C1 to 20 monoalcohol, in which component (B) the molar ratio (allophanate groups/isocyanurate groups) is from 100/0 to 70/30. The proportion of the component (A1) or (A2) to the total weight of the component (A1) or (A2) and the component (B) is 60 mass% or more.

EP 4 647 451 A1

## Description

TECHNICAL FIELD

The present invention relates to a polyisocyanate composition, coating material composition and coating film.
Priority is claimed on Japanese Patent Application No. 2023-001167, filed January 6, 2023, Japanese Patent Application No. 2023-001168, filed January 6, 2023, and Japanese Patent Application No. 2023-106875, filed June 29, 2023, the contents of which are incorporated herein by reference.

BACKGROUND ART

Among polyurea coating material compositions, polyaspartic coating material compositions, which are aliphatic, are formed from an aspartic acid ester compound having an amino group and an aliphatic and/or alicyclic polyisocyanate composition containing isocyanate groups. The polyaspartic coating material compositions greatly suppress yellowing of a coating film caused by exposure to ultraviolet light, which is a defect of aromatic polyurea coating material composition, and have been conventionally used in a wide range of applications, such as various coating materials, flooring materials, or waterproofing materials.
Since an aspartic acid ester compound has a lower viscosity than that of a polyol as the main agent of a polyurethane coating material composition, a dilution solvent in the polyaspartic coating material composition can be significantly reduced, and therefore a high-solid formulation or a solvent-free formulation can be realized. In addition, the reaction between amino groups of the aspartic acid ester compounds and isocyanate groups of the aliphatic and/or alicyclic polyisocyanates promptly proceeds, and therefore the polyaspartic coating material composition has characteristics of a faster curing rate even at room temperature and superior mechanical strength compared to those of a polyurethane coating composition.
For example, Patent Document 1 discloses a polyaspartic coating material composition which is an aliphatic polyurea coating material composition composed of a polyamine component having a secondary amino group with an aspartic acid ester skeleton, and a polyisocyanate component having isocyanate groups and being an aliphatic polyisocyanate composition. The coating material composition exhibits a relatively long pot life and high coating film hardness, and therefore has characteristics of applicability without using a high-pressure impingement mixer spray apparatus.

Citation List

Patent Document

Patent Document 1: Japanese Unexamined Patent Application, First Publication No. Hei 3-43472

SUMMARY OF INVENTION

Technical Problem

The polyaspartic coating material composition disclosed in Patent Document 1 leaves room for further improvement in terms of the elongation percentage of a coating film using the polyaspartic coating material composition.
A curing agent that can be suitably used in polyaspartic coating material compositions is required to improve the elongation percentage.
In addition, since crystallization tends to occur depending on the constitution of a curing agent, the curing agent tends to become cloudy and there is a case in which components in a coating film are less likely to become uniform when applied to a polyaspartic coating material composition. Therefore, a curing agent that can be suitably used in a polyaspartic coating material composition is also required to be less likely to become cloudy.
The present invention has been made in consideration of the above circumstances, and aims to provide a polyisocyanate composition that can be used as a suitable curing agent in a polyaspartic coating material composition, has high transparency, and can realize an excellent elongation percentage of the resultant coating film, as well as a coating material composition and a coating film using the same. Solution to Problem
The present invention encompasses the following aspects.

[1] A polyisocyanate composition containing a component (A) and a component (B), wherein

the component (A) is a component (A1) or a component (A2),

the component (A1) is a polyisocyanate component obtained from at least one type of diisocyanate selected from the group consisting of aliphatic diisocyanates and alicyclic diisocyanates and a polyester polyol in which the average number of functional groups is 2 or 3,
the component (A2) is a polyisocyanate component obtained from at least one type of diisocyanate selected from the group consisting of aliphatic diisocyanates and alicyclic diisocyanates, a polyester polyol in which the average number of functional groups is 2 or 3, and a polyoxyalkylene polyol in which the average number of functional groups is 2 to 4,
the component (B) is a polyisocyanate component obtained from at least one type of diisocyanate selected from the group consisting of aliphatic diisocyanates and alicyclic diisocyanates and a C1-20 monoalcohol, the molar ratio of allophanate groups to isocyanurate groups (allophanate groups/isocyanurate groups) in the polyisocyanate component being 100/0 to 70/30, and
the ratio of the component (A) relative to the total amount of the component (A) and the component (B) is 60% by mass or more.

[2] The polyisocyanate composition according to [1] mentioned above, wherein the average number of functional groups in the polyester polyol is 3.
[3] The polyisocyanate composition according to [2] mentioned above, wherein the number-average molecular weight of the polyester polyol is 250 or more and 4000 or less, and
the number-average molecular weight of the polyoxyalkylene polyol is 200 or more and 1500 or less.
[4] The polyisocyanate composition according to [1] mentioned above, wherein the average number of functional groups in the polyester polyol is 2.
[5] The polyisocyanate composition according to [4] mentioned above, wherein the number-average molecular weight of the polyester polyol is 250 or more and 4000 or less, and
the number-average molecular weight of the polyoxyalkylene polyol is 100 or more and 2000 or less.
[6] The polyisocyanate composition according to any one of [1] to [5] mentioned above, further containing one or both of an ultraviolet absorber and a light stabilizer.
[7] A coating material composition containing a main agent and a curing agent, wherein

the main agent is an aspartic acid ester compound of the following formula (I), and
the curing agent is the polyisocyanate composition of any one of [1] to [6] mentioned above.

[Chemical formula 1]

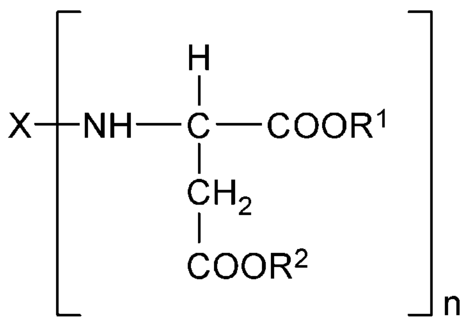

· · · (I)

(In the formula (1), X is an n-valent organic group formed by removing a primary amino group from an n-valent polyamine, $R^1$ and $R^2$ are organic groups that are inert to isocyanate groups under reaction conditions, the organic groups being identical to or different from each othert, and n is an integer of 2 or more.)

[8] The coating material composition according to [7] mentioned above, wherein the coating material composition is a coating material for an architectural structure.
[9] A coating film formed by curing the coating material composition of [7] mentioned above.

Advantageous Effects of Invention

The present invention makes it possible to provide a polyisocyanate composition that can be used as a curing agent suitable for use in a polyaspartic coating material composition and can impart excellent weather resistance, elongation percentage, and/or low-temperature elongation to the resultant coating film, as well as a coating material

composition and a coating film using the same.

DESCRIPTION OF EMBODIMENTS

An embodiment for carrying out the present invention (hereinafter, referred to as "the present embodiment") will be explained specifically below. The present invention is not limited to the present embodiment described below. The present invention may be modified appropriately to be carried out within a scope of the gist thereof.
In the present specification, the term "polyol" refers to a compound that has two or more hydroxyl groups (-OH).
In the present specification, the term "polyisocyanate" refers to a reaction product (polymer) formed by bonding plural monomeric compounds (monomers) each having at least one isocyanate group (-NCO).

<Polyisocyanate composition>

The present embodiment relates to a polyisocyanate composition containing a component (A) and a component (B), wherein

the component (A) is a component (A1) or a component (A2),
the component (A1) is a polyisocyanate component obtained from at least one type of diisocyanate selected from the group consisting of aliphatic diisocyanates and alicyclic diisocyanates and a polyester polyol in which the average number of functional groups is 2 or 3,
the component (A2) is a polyisocyanate component obtained from at least one type of diisocyanate selected from the group consisting of aliphatic diisocyanates and alicyclic diisocyanates, a polyester polyol in which the average number of functional groups is 2 or 3, and a polyoxyalkylene polyol in which the average number of functional groups is 2 to 4,
the component (B) is a polyisocyanate component obtained from at least one type of diisocyanate selected from the group consisting of aliphatic diisocyanates and alicyclic diisocyanates and a C1-20 monoalcohol, the molar ratio of allophanate groups to isocyanurate groups (allophanate groups/isocyanurate groups) in the polyisocyanate component being 100/0 to 70/30, and
the ratio of the component (A) relative to the total amount of the component (A) and the component (B) is 60% by mass or more.

The polyisocyanate composition according to the present embodiment can be preferably used as a curing agent in a polyaspartic coating material composition containing an aspartic acid ester compound as the main agent.

<First embodiment>

<<Component (A)>>

The component (A) is a component (A1) or a component (A2).

·Component (A1)

In the first embodiment of the present embodiment, the component (A1) is a polyisocyanate component obtained from at least one type of diisocyanate selected from the group consisting of aliphatic diisocyanates and alicyclic diisocyanates and a polyester polyol in which the average number of functional groups is 3.

·Diisocyanate

The diisocyanate monomer used in the first embodiment is selected from the group consisting of aliphatic diisocyanates and alicyclic diisocyanates. The aliphatic diisocyanates and the alicyclic diisocyanates are collectively referred to as diisocyanates.
The aliphatic diisocyanates are compounds each having only aliphatic groups in a molecule thereof. Although the aliphatic diisocyanates used in the present embodiment are not particularly limited, the aliphatic diisocyanates are preferably C4-30 aliphatic diisocyanates, and examples thereof include tetramethylene diisocyanate, pentamethylene diisocyanate, hexamethylene diisocyanate (hereinafter, abbreviated as "HDI"), 2,2,4-trimethyl-1,6-hexamethylene diisocyanate, and lysine diisocyanate. Among them, HDI is more preferable from the viewpoint of ease of industrial availability. One type of the above-mentioned aliphatic diisocyanates may be used alone or at least two types thereof may be used together.
The alicyclic diisocyanates are compounds each having a cyclic aliphatic group in a molecule thereof. Although

the alicyclic diisocyanates used in the present embodiment are not particularly limited, the alicyclic diisocyanates are preferably C8-30 alicyclic diisocyanates, and examples thereof include isophorone diisocyanate (hereinafter, abbreviated as "IPDI"), 1,3-bis(isocyanatomethyl)-cyclohexane, 4,4'-dicyclohexylmethane diisocyanate, norbornene diisocyanate, and hydrogenated xylylene diisocyanate. Among them, IPDI is more preferable from the viewpoint of weather resistance and ease of industrial availability. One type of the above-mentioned alicyclic diisocyanates may be used alone or at least two types thereof may be used together.

As the diisocyanate monomers, one type or two or more types of the aliphatic diisocyanates and one type or two or more types of the alicyclic diisocyanates may be used in combination.

·Polyester polyol in which the average number of functional groups is 3

The polyester polyol in which the average number of functional groups is 3 is a trivalent polyol including a repeating unit of $-O(CH_2)_5CO-$, and can be derived from trihydric alcohol and ε-caprolactone or the like. In addition, although there are no particular limitations, the polyester polyol can be obtained by subjecting ε-caprolactone or the like to ring-opening polymerization using a trihydric alcohol as an initiator in the presence of a catalyst, for example.

The polyester polyol in which the average number of functional groups is 3 is preferably a polycaprolactone polyol in which the average number of functional groups is 3.

In addition, the polyester polyol in which the average number of functional groups is 3 can be obtained by subjecting either one type of dibasic acid or a mixture of at least two types thereof and either one type of polyhydric alcohol or a mixture of at least two types thereof to a condensation reaction.

Examples of the dibasic acids include carboxylic acids such as succinic acid, adipic acid, dimer acid, maleic anhydride, phthalic anhydride, isophthalic acid, terephthalic acid, 1,4-cyclohexanedicarboxylic acid, succinic anhydride, maleic acid, phthalic acid, glutaric acid, suberic acid, azelaic acid, sebacic acid, decanedioic acid, itaconic acid, itaconic anhydride, hexahydrophthalic acid, hexahydrophthalic anhydride, tetrahydrophthalic acid, and tetrahydrophthalic anhydride.

Examples of the polyhydric alcohols include ethylene glycol, propylene glycol, diethylene glycol, 1,4-butanediol, neopentyl glycol, 1,6-hexanediol, trimethylpentanediol, cyclohexanediol, 2-ethyl-1,3-hexanediol, trimethylolpropane, glycerin, pentaerythritol, 2-methylolpropanediol, ethoxylated trimethylolpropane, 1,3-propanediol, pentane-1,5-diol, heptane-1,7-diol, octane-1,8-diol, nonane-1,9-diol, decane-1,10-diol, dodecane-1,12-diol, cyclohexane-1,4-dimethanol, 4,4'-(1-methylethylidene)biscyclohexanol, 1,1,1-trimethylolethane, hexane-1,2,6-triol, dipropylene glycol, propane-1,2-diol, butane-1,3-diol, hexane-1,2-diol, 2-methylpentane-2,4-diol, 3-methyl-1,5-pentanediol, octane-1,2-diol, 2-butyl-2-ethylpropane-1,3-diol, decane-1,2-diol, and 2-methyl-1,3-propanediol.

When a polyisocyanate composition containing the polyester polyol in which the average number of functional groups is 3 is used as a curing agent, and an aspartic acid ester compound is used as a main agent, the compatibility between the main agent and the curing agent becomes high. Therefore, the polyisocyanate composition according to the present embodiment can be suitably used as a curing agent of a polyaspartic coating material composition containing an aspartic acid ester compound as a main agent.

Furthermore, when the polyester polyol in which the average number of functional groups is 3 is used, high flexibility due to three-dimensional crosslinking is exhibited, thereby making it possible to produce a coating film that exhibits high elongation and has excellent weather resistance.

The number-average molecular weight of the polyester polyol in which the average number of functional groups is 3 is preferably 250 or more and 4000 or less, more preferably 250 or more and 1500 or less, even more preferably 250 or more and 1000 or less, particularly preferably 300 or more and 1000 or less, and most preferably 500 or more and 900 or less.

In the case where the number-average molecular weight of the polyester polyol in which the average number of functional groups is 3 is the above-mentioned lower limit or more, a coating film that exhibits high coating film elongation can be produced, when used as a curing agent of a polyaspartic coating material composition containing an aspartic acid ester compound as a main agent.

In the case where the number-average molecular weight of the polyester polyol in which the average number of functional groups is 3 is the above-mentioned upper limit or less, a coating material composition is easily maintained in a low viscosity state when used as a curing agent of a polyaspartic coating material composition containing an aspartic acid ester compound as a main agent. Therefore, the polyisocyanate composition according to the present embodiment can be suitably used as a curing agent of a polyaspartic coating material composition containing an aspartic acid ester compound as a main agent.

The number-average molecular weight of the polyester polyol in which the average number of functional groups is 3 is a number-average molecular weight measured by gel permeation chromatography (hereinafter, abbreviated as "GPC") based on polystyrene, and can be measured by the method described in the below-mentioned examples.

As the initiator, a trihydric alcohol such as trimethylolpropane or glycerin can be used.

As the catalyst, an organic titanate-based compound such as tetrabutyl titanate, tetrapropyl titanate, or tetraethyl titanate, a tin-based compound such as tin octylate, dibutyltin oxide, dibutyltin laurate, stannous chloride, or stannous bromide, or the like is preferably used. From the viewpoint of making it easier to adjust the amount of the polyester polyol in which the average number of functional groups is 3, the catalyst is preferably a tin-based compound.

The ring-opening polymerization of ε-caprolactone or the like is preferably carried out in a nitrogen gas atmosphere by charging ε-caprolactone and the above-mentioned initiator at a molar ratio that realizes a predetermined molecular weight, and adding a catalyst thereto in an amount of 0.1 ppm by mass or more and 100 ppm by mass or less relative to the ε-caprolactone, followed by allowing the reaction to proceed at a temperature of 150°C to 200°C for four hours to ten hours. However, it is important to control the amount of caprolactone dimers to a proportion of 100 ppm by mass or more and 1000 ppm by mass or less at the end of the reaction. If necessary, the caprolactone dimers may be removed from the produced polycaprolactone polyol by a method of extraction, distillation or the like.

A cyclic lactone other than ε-caprolactone, such as trimethylcaprolactone or valerolactone, may be partially mixed.

The polyester polyol in which the average number of functional groups is 3 can be produced, for example, by subjecting a dibasic acid or a mixture of dibasic acids and a polyhydric alcohol or a mixture of polyhydric alcohols to a conventionally-known condensation reaction. For example, the condensation reaction may be carried out by combining the dibasic acid component and the polyhydric alcohol component together and heating them at about 160°C to 220°C.

In the component (A1), the amount of the polyester polyol in which the average number of functional groups is 3 relative to 100 parts by mass of at least one type of diisocyanate selected from the group consisting of aliphatic diisocyanates and alicyclic diisocyanates is preferably 10 parts by mass to 80 parts by mass, and more preferably 30 parts by mass to 45 parts by mass, for example.

·Component (A2)

In the first embodiment of the present embodiment, the component (A2) is a polyisocyanate component obtained from at least one type of diisocyanate selected from the group consisting of aliphatic diisocyanates and alicyclic diisocyanates, a polyester polyol in which the average number of functional groups is 3, and a polyoxyalkylene polyol in which the average number of functional groups is 2 to 4.

·Diisocyanate

As the diisocyanates, the same monomers as those of the diisocyanates in the component (A1) may be used.

·Polyester polyol in which the average number of functional groups is 3

As the polyester polyol in which the average number of functional groups is 3, the same polymers as the polyester polyol in which the average number of functional groups is 3 in the component (A1) may be used.

· Polyoxyalkylene polyol

The polyoxyalkylene polyol is a divalent to tetravalent polyol having a repeating unit of $-O(CH_2)_m-$ (in the formula, m is an integer of 2 or more, preferably an integer of 3 to 5, and more preferably 3 or 4), and can be derived from a dihydric to tetrahydric alcohol with ethylene oxide, propylene oxide, tetrahydrofuran or the like. Although there are no particular limitations, the polyoxyalkylene polyol can be obtained by subjecting ethylene oxide, propylene oxide, tetrahydrofuran or the like to cationic polymerization using a dihydric to tetrahydric alcohol as an initiator in the presence of a catalyst, for example.

The polyoxyalkylene polyol is preferably a polytetramethylene glycol.

The number-average molecular weight of the polyoxyalkylene polyol is preferably 200 or more and 1500 or less, and more preferably 200 or more and 1000 or less.

In the case where the number-average molecular weight of the polyoxyalkylene polyol is the above-mentioned lower limit or more, a coating film that exhibits high coating film elongation can be produced when used as a curing agent of a polyaspartic coating material composition containing an aspartic acid ester compound as a main agent.

In the case where the number-average molecular weight of the polyoxyalkylene polyol is the above-mentioned upper limit or less, the coating material composition can be easily maintained in a low viscosity state when used as a curing agent of a polyaspartic coating material composition containing an aspartic acid ester compound as a main agent. Therefore, the polyisocyanate composition according to the present embodiment can be suitably used as a curing agent of a polyaspartic coating material composition containing an aspartic acid ester compound as a main agent.

The number-average molecular weight of the polyoxyalkylene polyol is a number-average molecular weight

measured by GPC based on polystyrene, and can be measured by the method described in the below-mentioned examples.

As the initiator, a dihydric alcohol such as ethylene glycol, propylene glycol, 1,4-butylene glycol, 1,3-butylene glycol, or neopentyl glycol, a trihydric alcohol such as trimethylolpropane, or glycerin, or a tetrahydric alcohol such as pentaerythritol can be used.

As the catalyst, a hydroxide of lithium, sodium, potassium, or the like, or a strongly basic catalyst such as alcoholate or alkylamine can be used.

It is preferable that the cationic polymerization of ethylene oxide, propylene oxide, tetrahydrofuran or the like be carried out in a nitrogen gas atmosphere by charging ethylene oxide, propylene oxide, tetrahydrofuran or the like with the above-mentioned initiator at molar ratios that realize a predetermined molecular weight, and further adding a catalyst thereto in an amount of 0.1 ppm by mass or more and 100 ppm by mass or less relative to ethylene oxide, propylene oxide, tetrahydrofuran or the like, followed by allowing the reaction to proceed at a temperature of 150°C to 200°C for four hours to ten hours.

In the component (A2), the amount of the polyester polyol in which the average number of functional groups is 3 relative to 100 parts by mass of the at least one type of diisocyanate selected from the group consisting of aliphatic diisocyanates and alicyclic diisocyanates is preferably 1 part by mass to 50 parts by mass, and more preferably 5 parts by mass to 10 parts by mass, for example.

In the component (A2), the amount of the a polyoxyalkylene polyol in which the average number of functional groups is 2 to 4 relative to 100 parts by mass of the at least one type of diisocyanate selected from the group consisting of aliphatic diisocyanates and alicyclic diisocyanates is preferably 1 part by mass to 50 parts by mass, and more preferably 10 parts by mass to 20 parts by mass, for example.

The isocyanate content (hereinafter, may be referred to as "NCO content") of the component (A) relative to the total amount (100% by mass) of the component (A) is preferably 5% by mass or more and 30% by mass or less. The NCO content is more preferably 6% by mass or more, and even more preferably 7% by mass or more. The NCO content is more preferably 25% by mass or less, even more preferably 20% by mass or less, and even more preferably 10% by mass or less. In the case where the NCO content is the above-mentioned lower limit or more, the drying properties or the curing properties of a coating film are more easily maintained. In the case where the NCO content is the above-mentioned upper limit or less, the scratch resistance of the resultant coating film is easily improved when used as a curing agent of a polyaspartic coating material composition. The NCO content of the component (A) can be measured by the method described in the below-mentioned examples.

The viscosity of the component (A) at 25°C is preferably 500 mPa.s or more and 50000 mPa.s or less. The viscosity is more preferably 1000 mPa.s or more, even more preferably 1500 mPa.s or more, and particularly preferably 2000 mPa.s or more. The viscosity is more preferably 40000 mPa.s or less, even more preferably 30000 mPa.s or less, even more preferably 25000 mPa.s or less, and particularly preferably 5000 mPa.s or less. In the case where the viscosity is the above-mentioned lower limit or more, the scratch resistance of the resultant coating film is easily improved, when used as a curing agent of a polyaspartic coating material composition. In the case where the viscosity is the above-mentioned upper limit or less, the drying properties are more easily maintained. The viscosity of the component (A) is measured with an E-type viscometer at 25°, and can be measured by the method described in the below-mentioned examples.

The number-average molecular weight of the component (A) is preferably 250 or more and 4000 or less. The number-average molecular weight is more preferably 300 or more and 3000 or less, even more preferably 300 or more and 2500 or less, even more preferably 400 or more and 2000 or less, and particularly preferably 500 or more and 1700 or less. In the case where the number-average molecular weight is the above-mentioned lower limit or more, the scratch resistance of the resultant coating film is easily improved, when used as a curing agent of a polyaspartic coating material composition. In the case where the number-average molecular weight is the above-mentioned upper limit or less, the drying properties are more easily maintained. The number-average molecular weight of the component (A) is a number-average molecular weight measured by GPC based on polystyrene, and can be measured by the method described in the below-mentioned examples.

The average number of isocyanate groups in the component (A) is preferably 2.0 or more and 10.0 or less. The average number of isocyanate groups is more preferably 2.2 or more, even more preferably 2.4 or more, particularly preferably 2.6 or more, and even particularly preferably 2.8 or more. The average number of isocyanate groups is preferably 9.0 or less, more preferably 8.0 or less, even more preferably 7.0 or less, and particularly preferably 4.0 or less. In the case where the average number of isocyanate groups is the above-mentioned lower limit or more, the drying properties are more easily maintained. In the case where the average number of isocyanate groups is the above-mentioned upper limit or less, the scratch resistance and the weather resistance of the resultant coating film are easily improved, when used as a curing agent of a polyaspartic coating material composition. The average number of isocyanate groups in the component (A) can be measured by the method described in the below-mentioned examples.

The mass concentration of diisocyanate monomers in the component (A) relative to the total amount (100% by

mass) of the component (A) is preferably 1.0% by mass or less, more preferably 0.5% by mass or less, and even more preferably 0.3% by mass or less.

In the case where the mass concentration of diisocyanate monomers is the above-mentioned upper limit or less, the drying properties are more easily maintained. The mass concentration of diisocyanate monomers in the component (A) can be measured by gas chromatography analysis in accordance with the method described in the below-mentioned examples.

<<Method for producing component (A) >>

The component (A) can be produced by the method described in WO 2018/163959.

Specifically, the component (A) can be obtained by reacting isocyanate groups in diisocyanate monomers and hydroxyl groups in polyester polyol and/or polyoxyalkylene polyol in the presence of an excess amount of diisocyanate monomers, and allowing a urethane-forming reaction by which urethane groups are formed to proceed, followed by removing unreacted diisocyanate monomers from the resultant.

The component (A1) can be obtained by adding 10 parts by mass to 80 parts by mass, preferably 30 parts by mass to 45 parts by mass of polyester polyol in which the average number of functional groups is 3 to 100 parts by mass of at least one type of diisocyanate selected from the group consisting of aliphatic diisocyanates and alicyclic diisocyanates, and allowing a urethane-forming reaction to proceed, followed by removing unreacted diisocyanate monomers from the resultant, for example.

The component (A2) can be obtained by adding 1 part by mass to 50 parts by mass, preferably 5 parts by mass to 10 parts by mass of polyester polyol in which the average number of functional groups is 3 and 1 part by mass to 50 parts by mass, preferably 10 parts by mass to 20 parts by mass of polyoxyalkylene polyol in which the average number of functional groups is 2 to 4 to 100 parts by mass of at least one type of diisocyanate selected from the group consisting of aliphatic diisocyanates and alicyclic diisocyanates, and allowing a urethane-forming reaction to proceed, followed by removing unreacted diisocyanate monomers from the resultant, for example.

<<Component (B)>>

The component (B) in the first embodiment of the present embodiment is a polyisocyanate component obtained from at least one type of diisocyanate selected from the group consisting of aliphatic diisocyanates and alicyclic diisocyanates and a C1-20 monoalcohol, the molar ratio of allophanate groups to isocyanurate groups (allophanate groups/isocyanurate groups) therein being 100/0 to 70/30.

·Diisocyanate

The description relating to the at least one type of diisocyanate selected from the group consisting of aliphatic diisocyanates and alicyclic diisocyanates in the component (B) is the same as that relating to the diisocyanate monomers in the above-mentioned component (A).

·C1-20 monoalcohol

The carbon number of the C1-20 monoalcohol is preferably 2 or more, more preferably 3 or more, particularly preferably 4 or more, and most preferably 6 or more. The carbon number of the C1-20 monoalcohol is preferably 16 or less, more preferably 12 or less, and particularly preferably 9 or less. One type of the monoalcohol or a mixture of at least two types thereof may be used. Although the monoalcohol used in the present invention may contain an ether group, an ester group, or a carbonyl group in a molecule thereof, a monoalcohol consisting of a saturated hydrocarbon group is preferable. In addition, a branched monoalcohol is more preferable.

Examples of such a monoalcohol include methanol, ethanol, 1-propanol, 2-propanol, 1-butanol, 2-butanol, isobutanol, 1-pentanol, 2-pentanol, isoamyl alcohol, 1-hexanol, 2-hexanol, 1-heptanol, 1-octanol, 2-ethyl-1-hexanol, 3,3,5-trimethyl-1-hexanol, tridecanol, pentadecanol, palmityl alcohol, stearyl alcohol, cyclopentanol, cyclohexanol, methylcyclohexanol, and trimethylcyclohexanol.

Among them, isobutanol, n-butanol, isoamyl alcohol, 1-hexanol, 1-heptanol, 1-octanol, 2-ethyl-1-hexanol, tridecanol, pentadecanol, palmityl alcohol, stearyl alcohol, and 1,3,5-trimethylcyclohexanol are more preferable. Alternatively, 1-propanol, isobutanol, 1-butanol, isoamyl alcohol, pentanol, 1-hexanol, 2-hexanol, 1-heptanol, 1-octanol, 2-octanol, 2-ethyl-1-hexanol, and 3,3,5-trimethyl-1-hexanol are preferable. Among these, 1-hexanol, 2-hexanol, 1-octanol, 2-octanol, 2-ethyl-1-hexanol, and 3,3,5-trimethyl-1-hexanol are preferable, and 2-ethyl-1-hexanol is more preferable.

In the component (B), the molar ratio of allophanate groups/isocyanurate groups is 100/0 to 70/30, and preferably 99/1 to 70/30. The molar ratio of allophanate groups/isocyanurate groups is preferably 98/2 or less, and more preferably

97/3 or less. The molar ratio of allophanate groups/isocyanurate groups is preferably 74/26 or more, more preferably 77/23 or more, even more preferably 80/20 or more, and particularly preferably 90/10 or more. In the case where the molar ratio of the allophanate group to the isocyanurate group is within the above-mentioned range, the curing properties become sufficient.

The molar ratio of the allophanate group to the isocyanurate group can be determined by $^1$H-NMR. One example of the methods for measuring a polyisocyanate composition using hexamethylene diisocyanate and an isocyanate prepolymer obtained therefrom as raw materials by $^1$H-NMR is shown below.

Example of method for carrying out measurement by $^1$H-NMR

The component (B) is dissolved in deuterated chloroform at a concentration of 10% by mass (0.03% by mass of tetramethylsilane is added to the component (B)). As the chemical shift reference, the hydrogen signal of tetramethylsilane is set at 0 ppm. Measurement is carried out by $^1$H-NMR, and the area ratio of the signal of a hydrogen atom bonded to nitrogen of an allophanate group (1 mol of a hydrogen atom relative to 1 mol of an allophanate group) around 8.5 ppm to the signal of hydrogen atoms of a methylene group adjacent to an isocyanurate group (6 mol of hydrogen atoms relative to 1 mol of an isocyanurate group) around 3.85 ppm is measured.

Allophanate groups/isocyanurate groups = (signal area around 8.5 ppm)/(signal area around 3.85 ppm/6)

Since a uretdione-based form tends to dissociate due to heat or the like, thereby generating HDI, the amount of the uretdione-based form is preferably reduced.

The amount of the uretdione-based form relative to the polyisocyanate composition is preferably 10% by mass or less, more preferably 5% by mass or less, and particularly preferably 3% by mass or less. The amount of the uretdione-based form can be measured by measuring the area ratio of a peak of the molecular weight of about 336 in gel permeation chromatography (hereinafter, GPC) using a differential refractometer. In the case where there is a peak that interferes with the measurement around the peak of the molecular weight of about 336, the amount can also be determined by a method in which the ratio between the height of the uretdione group peak at about 1770 $cm^{-1}$ and the height of the allophanate group peak at about 1720 $cm^{-1}$ is determined by quantification using an internal standard by FT-IR.

The GPC measurement method will be described below. The measured value of the molecular weight of the component (B) can be obtained by the following measurement method. Device used: HLC-8120 (manufactured by Tosoh Corporation), columns used: TSK GEL Super H1000, TSK GEL Super H2000, and TSK GEL Super H3000 (all manufactured by Tosoh Corporation), sample concentration: 5 wt/vol% (for example, 50 mg of a sample dissolved in 1 ml of THF), carrier: THF, detection method: differential refractometer, elution rate 0.6 ml/min., and column temperature 40°C). The GPC calibration curve is created using, as standards, polystyrenes with molecular weights of 50000 to 2050 (PSS-06 (Mw 50000), BK13007 (Mp = 20000, Mw/Mn = 1.03), PSS-08 (Mw = 9000), PSS-09 (Mw = 4000), and 5040-35125 (Mp = 2050, Mw/Mn = 1.05) manufactured by GL Sciences Inc.), trimer to heptamer of isocyanurate-based form in a hexamethylene diisocyanate-based polyisocyanate composition (Duranate TPA-100, manufactured by Asahi Kasei Corporation) (the molecular weight of isocyanurate trimer is 504, the molecular weight of isocyanurate pentamer is 840, and the molecular weight of isocyanurate heptamer is 1176) and HDI (the molecular weight thereof is 168).

In the case where a large amount of a urethane-based form is contained, the cross-linkability of the polyisocyanate composition is deteriorated, which is not preferable. The amount of the urethane-based form contained in the polyisocyanate composition according to the present invention is preferably 10% by mass or less, more preferably 5% by mass or less, and even more preferably 3% by mass or less.

In addition, it is not preferable that the amount of a biuret-based form and other diisocyanate polymers become large, because the solubility is lowered. The range of the amount of the biuret-based form and other diisocyanate polymers contained in the polyisocyanate composition of the present invention is preferably 10% by mass or less, more preferably 5% by mass or less, and even more preferably 3% by mass or less.

In the component (B), 1 part by mass to 20 parts by mass, preferably 1 part by mass to 10 parts by mass of a C1-20 monoalcohol is preferably contained relative to 100 parts by mass of at least one type of diisocyanate selected from the group consisting of aliphatic diisocyanates and alicyclic diisocyanates, for example.

The isocyanate group content (hereinafter, NCO content) of the component (B) is 10% by mass to 22% by mass, preferably 13% by mass to 21% by mass, and more preferably 16% by mass to 20% by mass in a state in which neither solvents nor diisocyantes are substantially contained. In the case where the NCO content is within a range of 10% by mass to 22% by mass, the compatibility with the component (A) is improved, and a polyisocyanate composition having sufficient cross-linkability can be obtained.

The viscosity of the component (B) is preferably 50 mPa.s to 500 mPa.s in a state in which neither solvents nor diisocyantes are substantially contained. The viscosity of the component (B) is preferably 75 mPa.s or more and more preferably 90 mPa.s or more. The viscosity of the component (B) is preferably 450 mPa.s or less, more preferably 400 mPa.s or less, even more preferably 350 mPa.s or less, and particularly preferably 300 mPa.s or less. In the case where the viscosity of the component (B) is 50 mPa.s or more, a polyisocyanate composition having sufficient cross-linkability can be

obtained. In the case where the viscosity of the component (B) is 500 mPa.s or less, a polyisocyanate composition in which the amount of a volatile organic compound (VOC) component is reduced can be obtained.

The viscosity of the component (B) is measured with an E-type viscometer at 25°C, and can be measured by the method described in the below-mentioned examples.

The average number of isocyanate groups in the component (B) is preferably 1.8 to 2.5. The average number of isocyanate groups in the component (B) is more preferably 2.0 or more. The average number of isocyanate groups in the component (B) is preferably 2.4 or less, and more preferably 2.3 or less. In the case where the average number of isocyanate groups is within a range of 2.0 to 2.5, the curing properties when made into a coating film become favorable.

The average number of isocyanate groups can be obtained by the following equation.

Average number of isocyanate groups = [Number-average molecular weight × NCO content (%)]/4200

The number-average molecular weight can be determined by GPC measurement.

<<Method for producing component (B)>>

The component (B) can be obtained by subjecting 100 parts by mass of at least one type of diisocyanate selected from the group consisting of aliphatic diisocyanates and alicyclic diisocyanates and 1 part by mass to 20 parts by mass, preferably 1 part by mass to 10 parts by mass of C1-20 monoalcohol to urethane-forming reaction, and then adding an allophanate-forming catalyst thereto to allow allophanate-forming reaction to proceed, followed by terminating the reaction and then removing unreacted diisocyanate monomers therefrom, for example.

<<Blending ratio of component (A) and component (B)>>

In the present embodiment, the ratio of the component (A) relative to the total amount of the component (A) and the component (B) is 60% by mass or more.

In the present embodiment, the ratio of the component (A) relative to the total amount of the component (A) and the component (B) is preferably 99% by mass or less, more preferably 95% by mass or less, even more preferably 90% by mass or less, and particularly preferably 80% by mass or less.

In the present embodiment, the ratio of the component (A) relative to the total amount of the component (A) and the component (B) is preferably 60% by mass or more and 95% by mass or less, more preferably 60% by mass or more and 90% by mass or less, and even more preferably 60% by mass or more and 80% by mass or less.

In the case where the content ratio of the component (A) is within the above-mentioned range, a polyisocyanate composition which can be used as a curing agent suitable for use in a polyaspartic coating material composition and can impart an excellent elongation percentage to the resultant coating film can be obtained.

In the case where the content d ratio of the component (A) is the above-mentioned lower limit or more, a coating film that exhibits high flexibility due to three-dimensional crosslinking and high elongation can be produced.

In the case where the content ratio of the component (A) is the above-mentioned upper limit or less, the component (B) disrupts the orientation of the component (A1) or the component (A2). As a result, crystallization of the component (A) is disrupted, thereby making it possible to produce a coating film that exhibits high coating film elongation.

The NCO content of the polyisocyanate composition relative to the total amount (100% by mass) of the components (A) and (B) is preferably 5% by mass or more and 30% by mass or less. The NCO content is more preferably 6% by mass or more and even more preferably 7% by mass or more. The NCO content is more preferably 30% by mass or less, even more preferably 25% by mass or less, even more preferably 15% by mass or less, and particularly preferably 13% by mass or less. In the case where the NCO content is the above-mentioned lower limit or more, the drying properties or the curing properties of the resultant coating film are more easily maintained, when used as a curing agent of a polyaspartic coating material composition. In the case where the NCO content is the above-mentioned upper limit or less, a coating film that exhibits high coating film elongation can be produced, when used as a curing agent of a polyaspartic coating material composition. The NCO content can be measured by the method described in the below-mentioned examples.

The viscosity of the polyisocyanate composition at 25°C is preferably 500 mPa.s or more and 4000 mPa.s or less. The viscosity is more preferably 3000 mPa.s or less, even more preferably 2000 mPa.s or less, and particularly preferably 1350 mPa.s or less. The viscosity is preferably 1000 mPa.s or more.

In the case where the viscosity is the above-mentioned lower limit or more, a coating film that exhibits high coating film elongation can be produced, when used as a curing agent of a polyaspartic coating material composition. In the case where the viscosity is the above-mentioned upper limit or less, the weather resistance is more easily maintained.

The viscosity of the polyisocyanate composition is measured with an E-type viscometer at 25°C, and can be measured by the method described in the below-mentioned examples.

The average number of isocyanate groups in the polyisocyanate composition is preferably 1.8 or more and 10.0 or less. The average number of isocyanate groups is more preferably 2.0 or more and particularly preferably 2.8 or more.

The average number of isocyanate groups is more preferably 10.0 or less, more preferably 5.0 or less, and particularly preferably 3.5 or less. In the case where the average number of isocyanate groups is the above-mentioned lower limit or more, the weather resistance of the resultant coating film is easily maintained, when used as a curing agent of a polyaspartic coating material composition. In the case where the average number of isocyanate groups is the above-mentioned upper limit or less, a coating film that exhibits high coating film elongation can be produced, when used as a curing agent of a polyaspartic coating material composition.

The average number of isocyanate groups in the polyisocyanate composition can be measured by the method described in the below-mentioned examples.

<<Optional component>>

In the present embodiment, the polyisocyanate composition preferably contains one or both of an ultraviolet absorber and a light stabilizer.

Although the ultraviolet absorber is not particularly limited, examples thereof include benzotriazole-based compounds, triazine-based compounds, benzophenone-based compounds, and cyanoacrylate-based compounds.

Although the benzotriazole-based compounds are not particularly limited, examples thereof include Tinuvin P, PS, 99-2, 213, 234, 326, 329, 360, 384-2,571, 900, 928, 970, and 1130 (manufactured by BASF Japan Ltd.), ADK STAB LA-24, 29, 31RG, 31G, 32, 36, 36RG, and F70 (manufactured by ADEKA CORPORATION), and EVERSORB 70, 71, 72, 73, 74, 75, 76, 77, 78, 79, 80, 81, 82, 88, 89, 109, and·234 (manufactured by Everlight Chemical Industrial Corp).

Although the triazine-based compounds are not particularly limited, examples thereof include Tinuvin 400, 400-DW, 405, 460, 477, 479, 479-DW, 1577ED, and 1600 (manufactured by BASF Japan Ltd.), and EVERSORB 40, 41FD, and 45 (manufactured by Everlight Chemical Industrial Corp).

Although the benzophenone-based compounds are not particularly limited, examples thereof include Chimassorb 81, and 81FL (manufactured by BASF Japan Ltd.), Uvinul 3049 and 3050 (manufactured by BASF Japan Ltd.), ADK STAB 1413 (manufactured by ADEKA CORPORATION), and EVERSORB 10, 11, 12, 51, and 52 (manufactured by Everlight Chemical Industrial Corp).

Although the cyanoacrylate-based compounds are not particularly limited, examples thereof include Uvinul 3030FF, 3035, and 3039 (manufactured by BASF Japan Ltd.).

From the viewpoint of maintaining the weather resistance over a long-term period, benzotriazole-based compounds, triazine-based compounds, and benzophenone-based compounds are preferred, and benzotriazole-based compounds and triazine-based compounds are more preferred.

Although the light stabilizer is not particularly limited, specific examples thereof include hindered amine-based compounds.

Although the hindered amine-based compounds are not particularly limited, examples thereof include Tinuvin 111FDL, 123, 123-DW, PA144, 152, 249, 292, 783FDL, and 765 (manufactured by BASF Japan Ltd.), ADK STAB LA-52, 57, 63P, 68, 72, 77Y, 77G, 81, and 402AF (manufactured by ADEKA CORPORATION), and EVERSORB 60, 61, 90, 91FD, 93, 94FD, 95, 765, and·S02 (manufactured by Everlight Chemical Industrial Corp).

In the case where the polyisocyanate composition contains one or both of an ultraviolet absorber and a light stabilizer, the addition amount thereof is, for example, 10 ppm by mass or more and 15000 ppm by mass or less.

In the present embodiment, the polyisocyanate composition may contain an antioxidant. Although a hindered phenol-based antioxidant is not particularly limited, examples thereof include dibutylhydroxytoluene (hereinafter, may be abbreviated as "BHT"), Irganox 1010 (tradename), Irganox 1135 (tradename), Irganox 1330 (tradename), Irganox 3114 (tradename), Irganox 565 (tradename), and Irganox 1520L (tradename) (each manufactured by BASF SE), and ADK STAB AO-20 (tradename), ADK STAB AO-30 (tradename), ADK STAB AO-50 (tradename), ADK STAB AO-60 (tradename), and ADK STAB AO-80 (tradename) (each manufactured by ADEKA CORPORATION).

<Second embodiment>

In the second embodiment of the present embodiment, the description relating to the same configuration as that in the first embodiment may be omitted.

<<Component (A)>>

The component (A) is a component (A1) or a component (A2).

·Component (A1)

The component (A1) is a polyisocyanate component obtained from at least one type of diisocyanate selected

from aliphatic diisocyanates and alicyclic diisocyanates and a polyester polyol in which the average number of functional groups is 2.

·Diisocyanate

The diisocyanates used in the second embodiment are selected from the group consisting of aliphatic diisocyanates and alicyclic diisocyanates.
As the aliphatic diisocyanates and the alicyclic diisocyanates, the monomers described in the first embodiment may be used in a similar manner, and HDI is preferably used.

·Polyester polyol in which the average number of functional groups is 2

The polyester polyol in which the average number of functional groups is 2 is a divalent polyol including a repeating unit of $-O(CH_2)_5CO-$, and can be derived from dihydric alcohol and ε-caprolactone or the like. Although there are no particular limitations, the polyester polyol can be obtained by subjecting ε-caprolactone or the like to ring-opening polymerization using dihydric alcohol as an initiator in the presence of a catalyst, for example.
The polyester polyol in which the average number of functional groups is 2 can be obtained by subjecting one type of dibasic acid or a mixture of at least two types thereof and one type of polyhydric alcohol or a mixture of at least two types thereof to a condensation reaction.
Examples of the dibasic acids include carboxylic acids such as succinic acid, adipic acid, dimer acid, maleic anhydride, phthalic anhydride, isophthalic acid, terephthalic acid, 1,4-cyclohexanedicarboxylic acid, succinic anhydride, maleic acid, phthalic acid, glutaric acid, suberic acid, azelaic acid, sebacic acid, decanedioic acid, itaconic acid, itaconic anhydride, hexahydrophthalic acid, hexahydrophthalic anhydride, tetrahydrophthalic acid, and tetrahydrophthalic anhydride. Among these, adipic acid or sebacic acid is preferably used.
Examples of the polyhydric alcohols include ethylene glycol, propylene glycol, diethylene glycol, 1,3-butanediol, 1,4-butanediol, neopentyl glycol, 1,6-hexanediol, trimethylpentanediol, cyclohexanediol, 2-ethyl-1,3-hexanediol, trimethylolpropane, glycerin, pentaerythritol, 2-methylolpropanediol, ethoxylated trimethylolpropane, 1,3-propanediol, pentane-1,5-diol, heptane-1,7-diol, octane-1,8-diol, nonane-1,9-diol, decane-1,10-diol, dodecane-1,12-diol, cyclohexane-1,4-dimethanol, 4,4'-(1-methylethylidene)biscyclohexanol, 1,1,1-trimethylolethane, hexane-1,2,6-triol, dipropylene glycol, propane-1,2-diol, butane-1,3-diol, hexane-1,2-diol, 2-methylpentane-2,4-diol, 3-methyl-1,5-pentanediol, octane-1,2-diol, 2-butyl-2-ethylpropane-1,3-diol, decane-1,2-diol, and 2-methyl-1,3-propanediol. Among these, diethylene glycol, 1,3-butanediol, 1,4-butanediol, and 3-methyl-1,5-pentanediol are preferable.
The polyester polyol in which the average number of functional groups is 2 is preferably a polycaprolactone polyol in which the average number of functional groups is 2, a polyester polyol which is a condensate of dibasic acid and polyhydric alcohol, in which the average number of functional groups is 2, or a mixture thereof.
**In** the case where a polyisocyanate composition containing a polyester polyol in which the average number of functional groups is 2 is used as a curing agent and an aspartic acid ester compound is used as a main agent, the compatibility between the main agent and the curing agent becomes high. Therefore, the polyisocyanate composition according to the present embodiment can be suitably used as a curing agent of a polyaspartic coating material composition containing an aspartic acid ester compound as a main agent.
In addition, when the polyester polyol in which the average number of functional groups is 2 is used, high flexibility is exhibited due to physical crosslinking, thereby making it possible to produce a coating film that exhibits high coating film elongation, particularly at low temperatures.
The number-average molecular weight of the polyester polyol in which the average number of functional groups is 2 is preferably 250 or more and 4000 or less, more preferably 250 or more and 1500 or less, even more preferably 250 or more and 1000 or less, even more preferably 300 or more and 800 or less, and particularly preferably 400 or more and 800 or less.
In the case where the number-average molecular weight of the polyester polyol in which the average number of functional groups is 2 is the above-mentioned lower limit or more, a coating film that exhibits high coating film elongation can be produced, when used as a curing agent of a polyaspartic coating material composition containing an aspartic acid ester compound as a main agent.
In the case where the number-average molecular weight of the polyester polyol in which the average number of functional groups is 2 is the above-mentioned upper limit or less, the external appearance of the polyisocyanate composition is easily improved. In addition, the coating material composition is easily maintained in a low viscosity state when used as a curing agent of a polyaspartic coating material composition containing an aspartic acid ester compound as a main agent. Therefore, the polyisocyanate composition according to the present embodiment can be suitably used as a curing agent of a polyaspartic coating material composition containing an aspartic acid ester compound as a main agent.
The number-average molecular weight of the polyester polyol in which the average number of functional groups

is 2 is a number-average molecular weight measured by GPC based on polystyrene, and can be measured by the method described in the below-mentioned examples.

In the production method of the polycaprolactone polyol, dihydric alcohol such as ethylene glycol, propylene glycol, diethylene glycol, 1,3-butanediol, 1,4-butanediol, neopentyl glycol, 1,6-hexanediol, trimethylpentanediol, cyclohexanediol, pentaerythritol, 2-methylolpropanediol, 2-ethyl-1,3-hexanediol, 1,3-propanediol, pentane-1,5-diol, heptane-1,7-diol, octane-1,8-diol, nonane-1,9-diol, decane-1,10-diol, dodecane-1,12-diol, cyclohexane-1,4-dimethanol, dipropylene glycol, propane-1,2-diol, butane-1,3-diol, hexane-1,2-diol, 2-methylpentane-2,4-diol, 3-methyl-1,5-pentanediol, octane-1,2-diol, 2-butyl-2-ethylpropane-1,3-diol, decane-1,2-diol, or 2-methyl-1,3-propanediol may be used as an initiator, for example. Among these, diethylene glycol, 1,3-butanediol, 1,4-butanediol, and 3-methyl-1,5-pentanediol are preferable.

As a catalyst, an organic titanate-based compound such as tetrabutyl titanate, tetrapropyl titanate, or tetraethyl titanate, or a tin-based compound such as tin octylate, dibutyltin oxide, dibutyltin laurate, stannous chloride, or stannous bromide is preferably used. The catalyst is preferably a tin-based compound from the viewpoint of making it easier to adjust the amount of the polyester polyol in which the average number of functional groups is 2.

It is preferable that ring-opening polymerization of ε-caprolactone or the like be carried out in a nitrogen gas atmosphere by charging ε-caprolactone and the above-mentioned initiator at a molar ratio that realizes the predetermined molecular weight, and adding 0.1 ppm by mass or more and 100 ppm by mass or less of a catalyst relative to ε-caprolactone, followed by allowing the reaction to proceed at 150°C to 200°C for four hours to ten hours. However, it is important to control the amount of caprolactone dimers to a proportion of 100 ppm by mass or more and 1000 ppm by mass or less at the end of the reaction. If necessary, the caprolactone dimers may be removed from the produced polycaprolactone polyol by a method of extraction, distillation or the like.

A cyclic lactone other than ε-caprolactone, such as trimethylcaprolactone or valerolactone, may be partially mixed.

The polyester polyol can be produced, for example, by subjecting a dibasic acid or a mixture of dibasic acids and a polyhydric alcohol or a mixture of polyhydric alcohols to a conventionally-known condensation reaction. For example, the condensation reaction may be carried out by combining the dibasic acid component and the polyhydric alcohol component together and heating them at about 160°C to 220°C.

**In** the component (A1) in the second embodiment, it is preferable that 10 parts by mass to 90 parts by mass, preferably 20 parts by mass to 50 parts by mass of the polyester polyol in which the average number of functional groups is 2 be contained relative to 100 parts by mass of at least one type of diisocyanate selected from aliphatic diisocyanates and alicyclic diisocyanates, for example.

·Component (A2)

In the second embodiment of the present embodiment, the component (A2) is a polyisocyanate component obtained from at least one type of diisocyanate selected from the group consisting of aliphatic diisocyanates and alicyclic diisocyanates, a polyester polyol in which the average number of functional groups is 2, and a polyoxyalkylene polyol in which the average number of functional groups is 2 to 4.

·Diisocyanate

As the diisocyanates in the component (A2) of the second embodiment, the same monomers as the diisocyanates in the component (A1) may be used, and HDI is preferably used.

·Polyester polyol in which the average number of functional groups is 2

As the polyester polyol in which the average number of functional groups is 2 in the component (A2) of the second embodiment, the same polymers as the polyester polyol in which the average number of functional groups is 2 in the component (A1) may be used.

·Polyoxyalkylene polyol

The polyoxyalkylene polyol is a divalent to tetravalent polyol having a repeating unit of $-O(CH_2)_m-$ (in the formula, m is an integer of 2 or more, preferably an integer of 3 to 5, and more preferably 3 or 4), and can be derived from a dihydric to tetrahydric alcohol and ethylene oxide, propylene oxide, tetrahydrofuran or the like. In addition, although there are no particular limitations, the polyoxyalkylene polyol can be obtained by subjecting ethylene oxide, propylene oxide, tetrahydrofuran or the like to cationic polymerization using a dihydric to tetrahydric alcohol as an initiator in the presence of a catalyst, for example.

The number-average molecular weight of the polyoxyalkylene polyol is preferably 100 or more and 2000 or less, and more preferably 200 or more and 1000 or less.

In the case where the number-average molecular weight of the polyoxyalkylene polyol is the above-mentioned lower limit or more, a coating film that exhibits high coating film elongation can be produced, when used as a curing agent of a polyaspartic coating material composition containing an aspartic acid ester compound as a main agent.

In the case where the number-average molecular weight of the polyoxyalkylene polyol is the above-mentioned upper limit or less, the coating material composition is easily maintained in a low viscosity state when used as a curing agent of a polyaspartic coating material composition containing an aspartic acid ester compound as a main agent. Therefore, the polyisocyanate composition according to the present embodiment can be suitably used as a curing agent of a polyaspartic coating material composition containing an aspartic acid ester compound as a main agent.

The number-average molecular weight of the polyoxyalkylene polyol is a number-average molecular weight measured by GPC based on polystyrene, and can be measured by the method described in the below-mentioned examples.

As the initiator, a dihydric alcohol such as ethylene glycol, propylene glycol, 1,4-butylene glycol, 1,3-butylene glycol, or neopentyl glycol, a trihydric alcohol such as trimethylene glycol, or glycerin, or a tetrahydric alcohol such as pentaerythritol can be used. A branched polyhydric alcohol is preferable from the viewpoint of obtaining a polyisocyanate component having low viscosity.

As the catalyst, a hydroxide of lithium, sodium, potassium, or the like, or a strongly basic catalyst such as alcoholate or alkylamine can be used.

It is preferable that the cationic polymerization of ethylene oxide, propylene oxide, tetrahydrofuran or the like be carried out in a nitrogen gas atmosphere by charging ethylene oxide, propylene oxide, tetrahydrofuran or the like with the above-mentioned initiator at a molar ratio that realizes the predetermined molecular weight, and further adding 0.1 ppm by mass or more and 100 ppm by mass or less of a catalyst relative to ethylene oxide, propylene oxide, tetrahydrofuran or the like, followed by allowing the reaction to proceed at a temperature of 150°C to 200°C for four hours to ten hours.

In the component (A2) of the second embodiment, it is preferable that 10 parts by mass to 50 parts by mass, preferably 10 parts by mass to 30 parts by mass of a polyester polyol in which the average number of functional groups is 2, and 10 parts by mass to 50 parts by mass, preferably 10 parts by mass to 30 parts by mass of a polyoxyalkylene polyol in which the average number of functional groups is 2 to 4 be contained relative to 100 parts by mass of at least one type of diisocyanate selected from aliphatic diisocyanates and alicyclic diisocyanates.

·Optional components of component (A)

The component (A) may further contain, as an optional component, a monoalcohol, diol or triol having a C2-20 branched chain.

The monoalcohol may contain, in a molecule thereof, at least one type selected from the group consisting of an ether group, ester group, carbonyl group, and phenyl group, and may be a benzyl alcohol, for example, but preferably is a monoalcohol consisting of a saturated hydrocarbon group. In addition, a monoalcohol having a branched chain is more preferable. Examples of such a monoalcohol include 1-hexanol, 2-hexanol, 1-heptanol, 1-octanol, 2-ethyl-1-hexanol, 3,3,5-trimethyl-1-hexanol, tridecanol, pentadecanol, palmityl alcohol, stearyl alcohol, cyclopentanol, cyclohexanol, methylcyclohexanol, and trimethylcyclohexanol.

Examples of the diol include: linear aliphatic diols such as ethylene glycol, 1,3-propanediol, 1,2-propanediol, 1,3-butanediol, 1,4-butanediol, 2,3-butanediol, 1,5-pentanediol, 1,2-pentanediol, 1,3-pentanediol, 1,4-pentanediol, neopentyl glycol, 1,6-hexanediol, 1,7-heptanediol, 1,8-octanediol, 1,9-nonanediol, 1,10-decanediol, diethylene glycol, polyethylene glycol, polypropylene glycol, and polytetramethylene glycol; and branched aliphatic diols such as 1,3-butanediol, 2-ethyl-1,3-hexanediol, 2,4-diethyl-1,5-pentanediol, 1,2-hexanediol, 1,2-octanediol, 2-methyl-1,3-propanediol, 3-methyl-1,5-pentanediol, 2-methyl-1,8-octanediol, 2-butyl-2-ethyl-1,3-propanediol, and 2,2-diethyl-1,3-propanediol. One type of these or a combination of at least two types thereof may be used. Among them, a branched aliphatic diol is preferably used because crystallization can be further suppressed.

Examples of the trialcohol include glycerin, and trimethylolpropane.

Among them, the component (A) preferably contains a diol having a C3-20 branched chain, and more preferably contains a diol having a C3-10 branched chain, as an optional component. The crystallization of the coating material composition can be further suppressed by using a diol having a C3-20 branched chain.

The isocyanate content (hereinafter, may be referred to as "NCO content") of the component (A) in the second embodiment relative to the total amount (100% by mass) of the component (A) is preferably 5% by mass or more and 30% by mass or less. The NCO content is preferably 6% by mass or more, more preferably 7% by mass or more and particularly preferably 8% by mass or more. The NCO content is preferably 25% by mass or less, and more preferably 20% by mass or less. In the case where the NCO content is the above-mentioned lower limit or more, the drying properties or the curing properties of a coating film are more easily maintained. In the case where the NCO content is the above-mentioned upper

limit or less, the scratch resistance of the resultant coating film is easily improved, when used as a curing agent of a polyaspartic coating material composition. The NCO content of the component (A) can be measured by the method described in the below-mentioned examples.

The viscosity of the component (A) at 25°C in the second embodiment is preferably 500 mPa.s or more and 10000 mPa.s or less. The viscosity is more preferably 600 mPa.s or more, more preferably 700 mPa.s or more and particularly preferably 1000 mPa.s or more. The viscosity is more preferably 10000 mPa.s or less, even more preferably 5000 mPa.s or less, even more preferably 2500 mPa.s or less, and particularly preferably 2000 mPa.s or less. In the case where the viscosity is the above-mentioned lower limit or more, the scratch resistance of the resultant coating film is easily improved, when used as a curing agent of a polyaspartic coating material composition. In the case where the viscosity is the above-mentioned upper limit or less, the drying properties are more easily maintained. The viscosity of the component (A) is measured with an E-type viscometer at 25°C, and can be measured by the method described in the below-mentioned examples.

The number-average molecular weight of the component (A) in the second embodiment is preferably 250 or more and 4000 or less. The number-average molecular weight is more preferably 300 or more and particularly preferably 400 or more. The number-average molecular weight is more preferably 4000 or less, even more preferably 3000 or less, and particularly preferably 2000 or less. In the case where the number-average molecular weight is the above-mentioned lower limit or more, the scratch resistance of the resultant coating film is easily improved, when used as a curing agent of a polyaspartic coating material composition. In the case where the number-average molecular weight is the above-mentioned upper limit or less, the drying properties are more easily maintained. The number-average molecular weight of the component (A) is a number-average molecular weight measured by GPC based on polystyrene, and can be measured by the method described in the below-mentioned examples.

The average number of isocyanate groups of the component (A) in the second embodiment is preferably 2.0 or more and 10.0 or less. The average number of isocyanate groups is more preferably 2.2 or more, even more preferably 2.4 or more and particularly preferably 2.6 or more. The average number of isocyanate groups is more preferably 9.0 or less, even more preferably 8.0 or less, even more preferably 7.0 or less, and particularly preferably 3.0 or less. In the case where the average number of isocyanate groups is the above-mentioned lower limit or more, the drying properties are more easily maintained. In the case where the average number of isocyanate groups is the above-mentioned upper limit or less, the scratch resistance and the weather resistance of the resultant coating film are easily improved, when used as a curing agent of a polyaspartic coating material composition. The average number of isocyanate groups of the component (A) can be measured by the method described in the below-mentioned examples.

The mass concentration of diisocyanate monomers of the component (A) in the second embodiment relative to the total amount (100% by mass) of the component (A) is preferably 1.0% by mass or less, more preferably 0.5% by mass or less, and even more preferably 0.3% by mass or less.

In the case where the mass concentration of diisocyanate monomers is the above-mentioned upper limit or less, the drying properties are more easily maintained. The mass concentration of diisocyanate monomers of the component (A) can be measured by the method described in the below-mentioned examples.

<<Method for producing component (A)>>

The component (A) in the second embodiment can be produced by the same method as that of the component (A) in the first embodiment.

The component (A1) in the second embodiment can be obtained by adding 10 parts by mass to 90 parts by mass, preferably 20 parts by mass to 50 parts by mass of a polyester polyol in which the average number of functional groups is 2 relative to 100 parts by mass of at least one type of diisocyanate selected from aliphatic diisocyanates and alicyclic diisocyanates, and allowing a urethane-forming reaction to proceed, followed by removing unreacted diisocyanate monomers from the resultant, for example.

The component (A2) in the second embodiment can be obtained by adding 10 parts by mass to 50 parts by mass, preferably 10 parts by mass to 30 parts by mass of a polyester polyol in which the average number of functional groups is 2, and 10 parts by mass to 50 parts by mass, preferably 10 parts by mass to 30 parts by mass of a polyoxyalkylene polyol in which the average number of functional groups is 2 to 4 relative to 100 parts by mass of at least one type of diisocyanate selected from the group consisting of aliphatic diisocyanates and alicyclic diisocyanates, and allowing a urethane-forming reaction to proceed, followed by removing unreacted diisocyanate monomers from the resultant, for example.

<<Component (B)>>

The component (B) in the second embodiment is a polyisocyanate component obtained from at least one type of diisocyanate selected from the group consisting of aliphatic diisocyanates and alicyclic diisocyanates and a C1-20 monoalcohol, in which the molar ratio of allophanate groups to isocyanurate groups (allophanate groups/isocyanurate

groups) is 100/0 to 70/30.

·Diisocyanate

Aliphatic diisocyanates are compounds each having only aliphatic groups in a molecule thereof. In contrast, alicyclic diisocyanates are compounds each having a cyclic aliphatic group in a molecule thereof.
When the aliphatic diisocyanates are used, the viscosity of the obtained polyisocyanate compound becomes low, which is more preferable. Examples of the aliphatic diisocyanates include tetramethylene diisocyanate, pentamethylene diisocyanate, hexamethylene diisocyanate (hereinafter, HDI), trimethylhexamethylene diisocyanate, and lysine diisocyanate.
Examples of the alicyclic diisocyanate include isophorone diisocyanate, hydrogenated xylylene diisocyanate, hydrogenated diphenylmethane diisocyanate and 1,4-diisocyanatec cyclohexane.
Among these, HDI, isophorone diisocyanate, hydrogenated xylylene diisocyanate, and hydrogenated diphenylmethane diisocyanate are preferable, from the viewpoint of ease of industrial availability. Among them, HDI is the most preferable because HDI realizes excellent weather resistance and softness of a coating film.

·Monoalcohol

In the component (B) of the second embodiment, the same monoalcohols as those used in the component (B) of the first embodiment can be used as the C1-20 monoalcohol.
The molar ratio of allophanate groups/isocyanurate groups in the component (B) of the second embodiment is the same as that of allophanate groups/isocyanurate groups in the component (B) of the first embodiment.
The amounts of uretdione-based forms, urethane-based forms, biuret-based forms, and other diisocyanate polymers in the component (B) of the second embodiment are the same as those in the component (B) of the first embodiment.

<<Method for producing component (B)>>

The component (B) of the second embodiment can be produced by a similar method to that of the component (B) of the first embodiment.
The NCO content, the viscosity, and the average number of isocyanate groups in the component (B) of the second embodiment are the same as those described as the NCO content, the viscosity, and the average number of isocyanate groups in the component (B) of the first embodiment.

<<Blending ratio of component (A) and component (B)>>

In the second embodiment, the ratio of the component (A) relative to the total amount of the component (A) and the component (B) is 60% by mass or more.
In the second embodiment, the ratio of the component (A) relative to the total amount of the component (A) and the component (B) is preferably 99% by mass or less, more preferably 95% by mass or less, even more preferably 90% by mass or less, and particularly preferably 80% by mass or less.
In the second embodiment, the ratio of the component (A) relative to the total amount of the component (A) and the component (B) is preferably 60% by mass or more and 99% by mass or less, more preferably 60% by mass or more and 95% by mass or less, even more preferably 60% by mass or more and 90% by mass or less, and particularly preferably 60% by mass or more and 80% by mass or less.
In the case where the content ratio of the component (A) is within the above-mentioned range, a polyisocyanate composition which can be used as a curing agent suitable to a polyaspartic coating material composition and can impart an excellent elongation percentage to the resultant coating film can be obtained". In addition, the weather resistance can be maintained. Since crystallization can be suppressed in the polyaspartic coating material composition in which the content ratio of the component (A) is within the above-mentioned range, a curing agent having a high transparency can be obtained.
The polyester polyol, in which the average number of functional groups is 2 and which is contained in the component (A), is easily crystallized. When crystallization occurs, the components that form a coating film produced tend to become non-uniform. In the case where the component (A) and the component (B) are contained, and the content ratio of the component (A) is within the above-mentioned ratio, the component (A) is less likely to be crystallized, and a coating film having a high uniformity is easily obtained.
The NCO content of the polyisocyanate composition in the second embodiment relative to the total amount (100% by mass) of the components (A) and (B) is preferably 5% by mass or more and 30% by mass or less. The NCO

content is more preferably 6% by mass or more and more preferably 7% by mass or more. The NCO content is preferably 30% by mass or less, more preferably 25% by mass or less, and particularly preferably 14% or less. In the case where the NCO content is the above-mentioned lower limit or more, the drying properties or the curing properties of the resultant coating film are more easily maintained, when used as a curing agent of a polyaspartic coating material composition. In the case where the NCO content is the above-mentioned upper limit or less, a coating film that exhibits high coating film elongation can be produced, when used as a curing agent of a polyaspartic coating material composition. The NCO content can be measured by the method described in the below-mentioned examples.

The viscosity of the polyisocyanate composition at 25°C in the second embodiment is preferably 500 mPa.s or more and 2000 mPa.s or less. The viscosity is more preferably 1700 mPa.s or less, even more preferably 1500 mPa.s or less, and particularly preferably 1250 mPa.s or less. In the case where the viscosity is the above-mentioned lower limit or more, a coating film that exhibits high coating film elongation can be produced, when used as a curing agent of a polyaspartic coating material composition. In the case where the viscosity is the above-mentioned upper limit or less, the handling of the obtained coating material composition is easily improved, when used as a curing agent of a polyaspartic coating material composition. The viscosity of the polyisocyanate composition is measured with an E-type viscometer at 25°C, and can be measured by the method described in the below-mentioned examples.

The average number of isocyanate groups in the polyisocyanate composition of the second embodiment is preferably 1.8 or more and 10.0 or less. The average number of isocyanate groups is more preferably 2.0 or more. The average number of isocyanate groups is more preferably 10.0 or less, even more preferably 5.0 or less, and particularly preferably 3.0 or less. In the case where the average number of isocyanate groups is the above-mentioned lower limit or more, the weather resistance of the resultant coating film is easily maintained, when used as a curing agent of a polyaspartic coating material composition. In the case where the average number of isocyanate groups is the above-mentioned upper limit or less, a coating film that exhibits high coating film elongation can be produced, when used as a curing agent of a polyaspartic coating material composition. The average number of isocyanate groups in the polyisocyanate composition can be measured by the method described in the below-mentioned examples.

<<Optional components>>

In the second embodiment, the optional components described in the first embodiment can be contained in a similar manner to the first embodiment.

<<Method for producing polyisocyanate composition>>

The polyisocyanate composition of the present embodiment (the first embodiment or the second embodiment) can be produced by mixing the above-mentioned component (A) and the above-mentioned component (B), and, as needed, optional components.

The mixing method is not particularly limited, and mixing may be carried out by hand-stirring or using a mixer such as Mazeller, for example. The viscosity may be adjusted by adding a solvent, as needed.

<Coating material composition>

The present embodiment relates to a coating material composition containing a main agent and a curing agent.

The main agent is an aspartic acid ester compound of the following formula (I), and the curing agent is the polyisocyanate composition according to the present embodiment (the first embodiment or the second embodiment).

[Chemical formula 2]

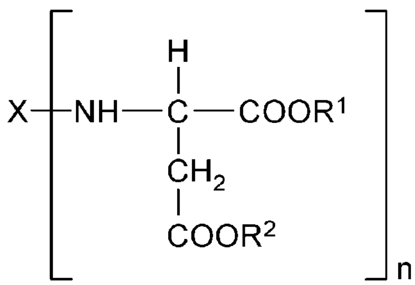

· · · (I)

(In the formula (1), X is an n-valent organic group formed by removing a primary amino group from an n-valent

polyamine, $R^1$ and $R^2$ are organic groups that are inert to isocyanate groups under reaction conditions, the organic groups being identical to or different from each other, and n is an integer of 2 or more.)

(X)

In the general formula (I), X is an n-valent organic group.
The n-valent organic group may be an aliphatic group, or an aromatic group. The aliphatic group may be linear, branched, or cyclic. n is an integer of 2 or more, as mentioned below.
Examples of the linear or branched aliphatic group include alkanediyl groups (alkylene groups), alkylidene groups, and alkylidyne groups.
Examples of the cyclic aliphatic group include cycloalkylene groups.
Examples of the aromatic group include arylene groups such as phenylene group.
More specifically, X is preferably a C2-20 linear, branched or cyclic divalent aliphatic group, from the viewpoint of the yellowing resistance of a polyaspartic coating material composition of the present embodiment. Examples of the C2-20 linear, branched or cyclic divalent aliphatic group include an n-butylene group, an n-pentylene group, an n-hexylene group, a 2,2,4-trimethylhexamethylene group, a 2,4,4-trimethylhexamethylene group, a 3,3,5-trimethyl-5-methylcyclohexylene group, a dicyclohexylmethylene group, and a 3,3'-dimethyldicyclohexylmethylene group.

($R^1$ and $R^2$)

In the general formula (I), $R^1$ and $R^2$ are each independently organic groups that are inert to isocyanate groups under reaction conditions.
In the present specification, the expression "inert to isocyanate groups under reaction conditions" means that $R^1$ and $R^2$ do not have any Zerewitinoff active hydrogencontaining groups such as a hydroxyl group, an amino group, or a thiol group (CH acidic compounds).
$R^1$ and $R^2$ are each independently and preferably a C1-10 alkyl group, and more preferably a methyl group, an ethyl group, a propyl group or a butyl group.
$R^1$ and $R^2$ may be identical to or different from each other.

(n)

In the general formula (I), n is an integer of 2 or more.
Among them, n is preferably an integer of 2 or more and 6 or less, more preferably an integer of 2 or more and 4 or less, even more preferably 2 or 3, and particularly preferably 2.

<<Method for producing aspartic acid ester compound of formula (I)>>

An aspartic acid ester compound of formula (I) can be produced by the method described in WO 2018/163959.
In the coating material composition of the present embodiment, the molar ratio of NCO/NH is preferably 1.0 to 2.0, and more preferably 1.1 to 1.5. The molar ratio of NCO/NH can be determined from the NCO content (%) of the polyisocyanate composition and the amine value of the aspartic acid ester compound.

<<Additive component>>

In the present embodiment, the coating material composition may contain an adsorbent as an additive component. As the adsorbent, a molecular sieve can be suitably used. The molecular sieve is natural or synthetic zeolite having a relatively high internal surface and a uniform pore size. The molecular sieve exerts relatively high adsorption power, and is used as an adsorbent or water-absorbing agent. The molecular sieve suitably used in the present embodiment has a surface pore size of preferably 2 angstroms to 10 angstroms, more preferably 2.5 angstroms to 4 angstroms, and even more preferably about 3 angstroms.
The amount of the adsorbent relative to the total weight of the coating material composition of the present embodiment is preferably 0.1 % by weight to 15% by weight, more preferably 0.5% by weight to 8% by weight, and even more preferably 0.5% by weight to 1.0% by weight.
In the present embodiment, the coating material composition may contain a matting agent as an additive component. Although the matting agent is not particularly limited, examples thereof include dry silica, and precipitated silica.
Although the dry silica is not particularly limited, examples thereof include ACEMATT 3400, ACEMATT 3300, and ACEMATT TS100 (each a tradename) (manufactured by Evonik Japan Co., Ltd.). Although the precipitated silica is not

particularly limited, examples thereof include ACEMATT 3600, ACEMATT OK607 (LC), ACEMATT OK390, ACEMATT OK900, ACEMATT OK520, ACEMATT OK500, ACEMATT OK412, ACEMATT HK390, ACEMATT 790, ACEMATT 82, ACEMATT HK520, ACEMATT HK400, ACEMATT 810, ACEMATT HK125, and ACEMATT HK440 (each a tradename) (manufactured by Evonik Japan Co., Ltd.). The matting agent may be surface-treated or untreated. One type of these may be used, or a combination of at least two types thereof may be used. Although the matting agent is not particularly limited, the use of dry silica is particularly preferable among the above.

The amount of the matting agent relative to the total mass of the solid content of the coating material composition in the present embodiment is preferably 3% by weight to 20% by weight.

The coating material composition of the present embodiment may further contain, as needed, a polyvalent active hydrogen compound encompassing a polyol, a melamine resin, an epoxy resin, a polyurethane resin, or the like, as an additive component.

In the case where the polyol has a carboxy group, an oxazoline group-containing compound and a carbodiimide group-containing compound may be blended in the coating material composition of the present embodiment.

In the case where the polyol has a carbonyl group, a hydrazide group-containing compound and a semicarbazide group-containing compound may be blended in the coating material composition of the present embodiment. One type of these compounds may be blended alone, or at least two types thereof may be blended together.

The coating material composition of the present embodiment preferably further contains, as an additive component, a surface conditioner, from the viewpoint of obtaining a coating film having excellent external appearance. The type of the surface conditioner is not particularly limited, and examples thereof include silicone-based surface conditioners, and acrylic-based surface conditioners.

The amount of the surface conditioner relative to the resin content of the coating material composition is preferably 0.05% by mass or more and 5% by mass or less. In the case where the amount of the surface conditioner is the above-mentioned lower limit or more, a coating film having excellent external appearance can be produced.

In the case where the amount of the surface conditioner is the above-mentioned upper limit or less, the cissing resistance, the recoating properties, and the stain resistance of the resultant coating film are further improved.

As the silicone-based surface conditioner, a commercially available product may be used, and examples thereof include: BYK-300, BYK-302, BYK-306, BYK-307, BYK-310, BYK-313, BYK-315N, BYK-320, BYK-322, BYK-323, BYK-325, BYK-326, BYK-330, BYK-331, BYK-333, BYK-342, BYK-370, BYK-375, BYK-377, BYK-378, and BYK-3760 (manufactured by BYK GmbH); DISPARLON 1711EF, DISPARLON 1761, DISPARLON LS-001, DISPARLON LS-050, DISPARLON LS-280, DISPARLON LS-460, and DISPARLON LS-480 (manufactured by Kusumoto Chemicals, Ltd.); and Tego Flow 425, Tego Glide 100, Tego Glide 110, Tego Glide 130, Tego Glide 406, Tego Glide 420, Tego Glide 432, Tego Glide 435, Tego Glide 440, Tego Glide 450, Tego Glide 482, Tego Glide 485, Tego Glide ZG400, Tego wet KL245, Tego wet 250, Tego wet 260, Tego wet 265, Tego wet 270, and Tego wet 280 (manufactured by Evonik Tego Chemie GmbH). One type of these may be used alone, or at least two types thereof may be used in combination.

As the acrylic-based surface conditioner, a commercially available product may be used, and examples thereof include BYK-350, BYK-354, BYK-355, BYK-356, BYK-358N, BYK-361N, BYK-392, BYK-394, and BYK-3441 (manufactured by BYK GmbH); DISPARLON LF-1983, DISPARLON LF-1984, LF-1985, DISPARLON UVX-35, and DISPARLON UVX-36 (manufactured by Kusumoto Chemicals, Ltd.); and Tego Flow 300, Tego Flow 370, Tego Flow ATF2, and Tego Flow ZFS460 (manufactured by Evonik Tego Chemie GmbH). One type of these may be used alone, or at least two types thereof may be used in combination.

As another type of the surface conditioner, a commercially available product can be used, and examples thereof include: BYK-399, BYK-3440, BYK-3550, BYK-3560, BYK-3565, BYK-SILCLEAN 3700, BYK-SILCLEAN 3701, and BYKETOL-OK (manufactured by BYK GmbH); DISPARLON UVX-272, DISPARLON UVX-2285, DISPARLON LHP-810, DISPARLON NSH-8430HF, DISPARLON LHP-90, DISPARLON LHP-91, DISPARLON LHP-95, and DISPARLON LHP-96 (manufactured by Kusumoto Chemicals, Ltd.). One type of these may be used alone, or at least two types thereof may be used in combination.

The coating material composition of the present embodiment may further contain, as an additive component, an antifoaming agent, a foam-suppressing agent, or a defoaming agent, from the viewpoint of obtaining a coating film having excellent external appearance. The types of the antifoaming agent, foam-suppressing agent, and defoaming agent are not particularly limited, and examples thereof include silicone-based agents, and polymer-based agents.

The amount of the antifoaming agent, foam-suppressing agent, or defoaming agent relative to the resin content of the coating material composition is preferably 0.05% by mass or more and 5% by mass or less. In the case where the amount of the antifoaming agent, foam-suppressing agent, or defoaming agent is the above-mentioned lower limit or more, the workability during blending and stirring is improved, and a coating film having excellent external appearance can be produced. In contrast, in the case where the amount of the antifoaming agent, foam-suppressing agent, or defoaming agent is the above-mentioned upper limit or less, the cissing resistance, recoating properties, and stain resistance of the resultant coating film are further improved.

As the silicone-based antifoaming agent, foam-suppressing agent, or defoaming agent, a commercially available product may be used, and examples thereof include: BYK-063, BYK-065, BYK-066N, BYK-067A, BYK-077, BYK-081, and BYK-1799 (manufactured by BYK GmbH); DISPARLON 1930N, DISPARLON 1934, and DISPARLON SPX-44 (manufactured by Kusumoto Chemicals, Ltd.); and Tego Airex 900, Tego Airex 916, Tego Airex 931, Tego Airex 935, Tego Airex 962, Tego Airex 980, and Tego Foamex N (manufactured by Evonik Tego Chemie GmbH). One type of these may be used alone, or at least two types thereof may be used in combination.

As the polymer-based antifoaming agent, foam-suppressing agent, or defoaming agent, a commercially available product may be used, and examples thereof include: BYK-051N, BYK-052N, BYK-054, BYK-055, BYK-057, BYK-354, BYK-392, BYK-1752, BYK-1788, BYK-1790, BYK-1791, and BYK-1794 (manufactured by BYK GmbH); DISPARLON OX-60, DISPARLON OX-6140, DISPARLON OX-70, DISPARLON OX-710, DISPARLON OX-750HF, DISPARLON OX-77EF, DISPARLON OX-880EF, DISPARLON OX-881, DISPARLON OX-883HF, DISPARLON LAP-10, DISPARLON LAP-20, DISPARLON LAP-30, DISPARLON 1952, DISPARLON 1958, DISPARLON 1960, DISPARLON P-410EF, DISPARLON PD-7, DISPARLON P-420, DISPARLON P-450, DISPARLON OX-881, DISPARLON OX-883HF, DISPARLON LAP-10, DISPARLON P-425, DISPARLON UVX-188, DISPARLON UVX-189, and DISPARLON UVX-190 (manufactured by Kusumoto Chemicals, Ltd.); and Tego Airex 910, Tego Airex 920, Tego Airex 936, Tego Airex 944, and Tego Airex 955 (manufactured by Evonik Tego Chemie GmbH). One type of these may be used alone or at least two types thereof may be used in combination.

As another type of the antifoaming agent, foam-suppressing agent, or defoaming agent, a commercially available product can be used, and examples thereof include: BYK-088 and BYK-141 (manufactured by BYK GmbH); DISPARLON OX-66EF, and DISPARLON OX-715 (manufactured by Kusumoto Chemicals, Ltd.); Tego Airex 940, Tego Airex 945, Tego Airex 950, and Tego Airex 986 (manufactured by Evonik Tego Chemie GmbH). One type of these may be used alone, or at least two types thereof may be used in combination.

The coating material composition of the present embodiment may further contain, as needed, a dispersing agent as an additive component.

As the dispersing agent, a commercially available product may be used, and examples thereof include DESPERBYK-103, DESPERBYK-145, DESPERBYK-2155, and DESPERBYK-2159 (manufactured by BYK GmbH).

One type of these may be used alone, or at least two types thereof may be used in combination.

As an additive component, a pigment such as titanium oxide, carbon black, indigo, quinacridone, or pearl mica; a metal powder pigment such as aluminum; a rheology control agent such as hydroxyethyl cellulose, a urea compound, or microgel; a curing accelerator such as a tin compound, zinc compound, or amine compound; or the ultraviolet absorber, light stabilizer, or antioxidant described above as an optional component, may be further contained.

The coating material composition of the present embodiment is a coating material for an architectural structure.

Examples of the coating material for an architectural structure include a coating material for floors of architectures, coating material for walls of architectures, coating material for roofs of architectures, or coating material for parts of architectures, such as a coating material for a rotor blade for wind power generation, a rotor blade of a helicopter, an aircraft wing, or a screw propeller of a ship.

The coating material composition according to the present invention makes it possible to produce a coating film that is flexible and has an increased crosslinking density. Such a coating film has particularly excellent weather resistance, and is therefore suitably used as a heavy-duty anti-corrosion coating of structures that require long-term weather resistance, such as bridges, highways, power transmission towers, or wind turbine power generation facilities (such as towers or blades), which are exposed to harsh environments such as wind, rain, snow, or temperature changes.

The coating material composition according to the present invention is suitably used to impart aesthetic appeal, weather resistance, acid resistance, anti-corrosion properties, chipping resistance, adhesion, or the like.

In addition, the coating material composition according to the present invention is also useful as an adhesive, a pressure-sensitive adhesive, an elastomer, a foam, a surface treatment agent, or the like.

<Coating film>

The present embodiment relates to a coating film formed by curing the coating material composition of the above-mentioned embodiment.

The coating film according to the present embodiment can be obtained by applying the above-mentioned coating material composition using a conventionally-known method such as roll coating, curtain flow coating, spray coating, bell coating, or electrostatic coating, followed by drying at room temperature or baking to cure the coating material composition.

The coating film according to the present embodiment has excellent elongation percentage.

[Examples]

Although the present invention will be explained more specifically with reference to examples and comparative examples below, the present invention is not limited to the following examples unless it departs from the gist of the present

invention.

Physical properties and evaluations of polyisocyanate compositions in examples and comparative examples were measured and evaluated as described below. The terms "parts" and "%" mean "parts by mass" and "% by mass", respectively, unless otherwise specified.

<Synthesis Example 1-1>

A component (A1) 1-1 as the component (A) was synthesized by the following method.

A four-necked flask equipped with a stirrer, a thermometer, a reflux condenser, a nitrogen blowing tube, and a dropping funnel was filled with nitrogen, 100 parts of HDI, 33.7 parts of polycaprolactone triol having a number-average molecular weight of 850 and a hydroxyl value of 198 were charged, and the temperature inside the reactor was kept at 95°C for 90 minutes while stirring to allow a urethane reaction to proceed. The cooled reaction liquid was filtered, and then unreacted HDI was removed using a thin-film evaporator. The polyisocyanate (A1) 1-1 was obtained, in which the NCO content was 9.0% by mass, the viscosity at 25°C was 4980 mPa.s, the number-average molecular weight was 1520, the average number of isocyanate groups was 3.3, and the mass concentration of HDI monomers was 0.2% by mass.

<Synthesis Example 1-2>

A component (A2)1-1 as the component (A) was synthesized by the following method.

A four-necked flask equipped with a stirrer, a thermometer, a reflux condenser, a nitrogen blowing tube, and a dropping funnel was filled with nitrogen, 100 parts of HDI, 6.9 parts of polycaprolactone triol having a number-average molecular weight of 550 and a hydroxyl value of 305, and 12.8 parts of polytetramethylene glycol having a number-average molecular weight of 1000 and a hydroxyl value of 112 were charged, and the temperature inside the reactor was kept at 90°C for one hour while stirring to allow a urethane-forming reaction to proceed. The cooled reaction liquid was filtered, and then unreacted HDI was removed using a thin-film evaporator. The polyisocyanate (A2) 1-1 was obtained, in which the NCO content was 8.9%, the viscosity at 25°C was 2740 mPa.s, the number-average molecular weight was 1570, the average number of isocyanate groups was 3.3, and the mass concentration of HDI monomers was 0.2% by mass.

<Synthesis Example 1-3>

A component (B) 1-1 as the component (B) was synthesized by the following method.

The inside of a four-neck flask equipped with a stirrer, a thermometer, and a cooling tube was replaced with nitrogen, 2700 g of HDI, and 210 g of 2-ethyl-1-hexanol were charged, and a urethane-forming reaction was allowed to proceed while stirring at 130°C for one hour. 0.54 g of a solution containing 20% of solid contents of zirconyl 2-ethylhexanoate in mineral spirits was added thereto as an allophanate-forming catalyst. When the refractive index of the reaction liquid increased to 0.0055, 0.81 g (4.0 times the molar amount relative to the catalyst) of a solution containing 50% of dodecyl phosphate in isobutanol (a dilution in which "JP-512", tradename, manufactured by JOHOKU CHEMICAL CO., LTD., was diluted with isobutanol) was added to the reaction liquid to stop the reaction. After the reaction liquid was filtered, unreacted HDI was removed using a falling thin film distillation apparatus at 160°C (27 Pa) the first time, and at 150°C (13Pa) the second time. The obtained polyisocyanate was a transparent liquid, the yield thereof was 770 g, the viscosity thereof was 110 mPa.s, and the NCO content thereof was 17.2%. When measured by NMR, the molar ratio of allophanate groups/isocyanurate groups was 97/3. The obtained polyisocyanate was referred to as the component (B) 1-1.

<Examples 1-1 to 1-9 and Comparative Examples 1-1 to 1-4>

Polyisocyanate compositions of Examples 1-1 to 1-9 and Comparative Examples 1-1 to 1-4 were obtained using the components (A1) 1-1, (A2) 1-1, and (B) 1-1 and an optional component.

As the optional component, a hindered amine-based compound, Tinuvin 765 (manufactured by BASF JAPAN LTD.), was used.

The mixing ratio of each component, physical properties of the component (A) alone, and physical properties of the polyisocyanate composition are shown in the following Table 1-1 and Table 1-2.

[Table 1-1]

| | | Example 1-1 | Example 1-2 | Example 1-3 | Example 1-4 | Example 1-5 | Example 1-6 | Example 1-7 |
|---|---|---|---|---|---|---|---|---|
| Component (A) | Type | (A1) 1-1 | (A1) 1-1 | (A1) 1-1 | (A2) 1-1 | (A1) 1-1 | (A2) 1-1 | (A2) 1-1 |
| | Amount (parts) | 70 | 60 | 60 | 70 | 90 | 70 | 70 |
| Component (B) | Type | (B) 1-1 | (B) 1-1 | (B) 1-1 | (B) 1-1 | (B) 1-1 | (B) 1-1 | (B) 1-1 |
| | Amount (parts) | 30 | 40 | 40 | 30 | 10 | 30 | 30 |
| Optional component | Type | - | - | Tinuvin 765 | - | - | - | - |
| | Amount | 0 | 0 | 10000 ppm | 0 | 0 | 0 | 0 |
| Physical properties of component (A) alone | Physical property 1-1 | 9.0% | 9.0% | 9.0% | 8.9% | 9.0% | 8.9% | 8.9% |
| | Physical property 1-2 | 4980 | 4980 | 4980 | 2740 | 4980 | 2740 | 2740 |
| | Physical property 1-3 | 1520 | 1520 | 1520 | 1570 | 1520 | 1570 | 1570 |
| | Physical property 1-4 | 3.3 | 3.3 | 3.3 | 3.3 | 3.3 | 3.3 | 3.3 |
| | Physical property 1-5 | 0.2 | 0.2 | 0.2 | 0.2 | 0.2 | 0.2 | 0.2 |
| Physical properties of polyisocyanate composition | Physical property 1-1 | 11.1 | 11.9 | 11.7 | 11.9 | 9.8 | 11.9 | 11.9 |
| | Physical property 1-2 | 1800 | 1283 | 1288 | 1283 | 3570 | 1283 | 1283 |
| | Physical property 1-4 | 2.9 | 2.8 | 2.8 | 3.0 | 3.1 | 3.0 | 3.0 |

[Table 1-2]

| | | Example 1-8 | Example 1-9 | Comparative Example 1-1 | Comparative Example 1-2 | Comparative Example 1-3 | Comparative Example 1-4 |
|---|---|---|---|---|---|---|---|
| Component (A) | Type | (A2) 1-1 | (A2) 1-1 | (A1) 1-1 | (A1) 1-1 | (A2) 1-1 | (A1) 1-1 |
| | Amount (parts) | 90 | 95 | 100 | 30 | 100 | *50* |
| Component (B) | Type | (B) 1-1 | (B) 1-1 | - | (B) 1-1 | - | (B) 1-1 |
| | Amount (parts) | 10 | 5 | 0 | 70 | 0 | 50 |

(continued)

| | | Example 1-8 | Example 1-9 | Comparative Example 1-1 | Comparative Example 1-2 | Comparative Example 1-3 | Comparative Example 1-4 |
|---|---|---|---|---|---|---|---|
| Optional component | Type | - | - | - | - | - | - |
| | Amount | 0 | 0 | 0 | 0 | 0 | 0 |
| Physical properties of component (A) alone | Physical property 1-1 | 8.9% | 8.9% | 9.0% | 9.0% | 8.9% | 9.0% |
| | Physical property 1-2 | 2740 | 2740 | 4980 | 4980 | 2740 | 4980 |
| | Physical property 1-3 | 1570 | 1570 | 1520 | 1520 | 1570 | 1520 |
| | Physical property 1-4 | 3.3 | 3.3 | 3.3 | 3.3 | 3.3 | 3.3 |
| | Physical property 1-5 | 0.2 | 0.2 | 0.2 | 0.2 | 0.2 | 0.2 |
| Physical properties of polyisocyanate composition | Physical property 1-1 | 9.7 | 9.3 | - | 14.4 | - | 13.1 |
| | Physical property 1-2 | 1990 | 2330 | - | 432 | - | 880 |
| | Physical property 1-4 | 3.2 | 3.3 | - | 2.9 | - | 2.7 |

Physical properties 1-1 to 1-5 in Table 1-1 and Table 1-2 mean the following physical properties.

(Physical property 1-1) NCO content (% by mass)

The NCO content (isocyanate content, % by mass) of the polyisocyanate was measured, as follows. 1 g to 3 g of the polyisocyanate produced in Production Example was precisely weighed (Wg) in a conical flask, and 20 mL of toluene was added thereto to completely dissolve the polyisocyanate. Then, 10 mL of a solution containing 2N din-butylamine in toluene was added thereto, and completely mixed, followed by leaving the mixture at room temperature for 15 minutes. Furthermore, 70 mL of isopropyl alcohol was added to this solution, and completely mixed. This solution was titrated with a 1N hydrochloric acid solution (factor F) using an indicator to obtain a titration value V2 mL. A similar titration operation was carried out without using polyisocyanate to obtain a titration value V1 mL. From the obtained titration values V2 mL and V1 mL, the NCO content of the polyisocyanate was calculated in accordance with the following equation.

$$\text{NCO content} = (V1 - V2) \times F \times 42 / (W \times 1000) \times 100$$

(Physical property 1-2) Viscosity (mPa.s)

The viscosity of the polyisocyanate was measured at 25°C using an E-type viscometer (tradename: RE-85R, manufactured by Toki Sangyo Co., Ltd). A standard rotor (1°34' × R24) was used for measurement. The frequency of rotation was set as follows.

100 rpm (in the case of less than 128 mPa.s)

50 rpm (in the case of 128 mPa.s or more and less than 256 mPa.s)
20 rpm (in the case of 256 mPa.s or more and less than 640 mPa.s)
10 rpm (in the case of 640 mPa.s or more and less than 1280 mPa.s)
5 rpm (in the case of 1280 mPa.s or more and less than 2560 mPa.s)
2.5 rpm (in the case of 2560 mPa.s or more and less than 5184 mPa.s)
1.0 rpm (in the case of 5184 mPa.s or more and less than 12960 mPa.s)
0.5 rpm (in the case of 12960 mPa.s or more and less than 25920 mPa.s)

(Physical property1-3) Number-average molecular weight

The number-average molecular weight of the polyisocyanate, polyester polyol, or polyoxyalkylene polyol was determined as the number-average molecular weight measured by gel permeation chromatography (hereinafter, abbreviated as "GPC") based on polystyrene standards using the following device.
Device: "HLC-8120GPC" (tradename) manufactured by Tosoh Corporation
Columns: "TSKgel Super H1000" (tradename) × 1 column,

"TSKgel Super H2000" (tradename) × 1 column, and
"TSKgel Super H3000" (tradename) × 1 column,
manufactured by Tosoh Corporation,

Carrier: tetrahydrofuran
Detection method: differential refractometer

(Physical property 1-4) Average number of isocyanate groups

The average number of isocyanate groups of the polyisocyanate was calculated from the NCO content (Physical property 1-1) and the number-average molecular weight (Physical property 1-3) in accordance with the following equation.

Average number of isocyanate groups = [number-average molecular weight × NCO content (%)] / 4200

(Physical property 1-5) Mass concentration of diisocyanate monomers (% by mass)

The mass concentration of diisocyanates in the polyisocyanate was determined as follows. First, a 20 mL sample bottle was placed on a digital balance and approximately 1 g of a sample was precisely weighed therein. Next, 0.03 g to 0.04 g of nitrobenzene (internal standard solution) was added thereto and precisely weighed. Finally, approximately 9 mL of ethyl acetate was added thereto, and the bottle was tightly capped and mixing was carried out thoroughly to prepare the sample. The prepared sample was quantified by gas chromatography analysis under the following conditions.
Device: "GC-8A" manufactured by Shimadzu Corporation
Column: "Silicone OV-17" manufactured by Shinwa Chemical Industries Ltd.
Column oven temperature: 120°C
Injection / detector temperature: 160°C

<Production of coating material composition>

As a main agent, "FEISARATIC F 420" (an aspartic acid ester compound, tradename, manufactured by Zhuhai Feiyang Protech CORP., LTD, the amine value was 201 mgKOH / g of resin: in the formula (I), X is a dicyclohexylmethylene group, $R^1$ is an ethyl group, $R^2$ is an ethyl group, and n is 2) was used. In Table 1-3 and Table 1-4, an aspartic acid ester compound is referred to as "PAE".
As a curing agent, the component (A) or polyisocyanate composition obtained above was used. Specific materials are shown in Table 1-3 and Table 1-4.
The main agent and the curing agent were blended such that the ratio of NCO/NH became 1.1, followed by adjusting the solid content of the coating material to 90% by mass with n-butyl acetate to obtain coating material compositions P1-1 to P1-6, P1-8, P1-9, and P1-11 to P1-14, and coating material compositions 1-1 to 1-6, 1-8, 1-9, and 1-11 to 1-14, respectively. The main agent and the curing agent were blended such that the ratio of NCO/NH became 1.1,

followed by adjusting the solid content of the coating material to 80% by mass with n-butyl acetate to obtain a coating material composition P1-7, and a coating material composition 1-7.

The additive components (an adsorbent and a matting agent) in the coating material compositions shown in Table 1-3 and Table 1-4 are the following materials.

Adsorbent: molecular sieve, 3A Powder (having a pore size of approximately 3 angstroms) manufactured by Union Showa K.K.

Matting agent: ACEMATT 3400 manufactured by Evonik Japan Co., Ltd.

In Table 1-3 and Table 1-4, the amount of the additive component is the ratio thereof relative to the total mass of the solid content of the coating material composition.

[Table 1-3]

| | Main agent | Curing agent | Additive component | |
|---|---|---|---|---|
| | | | Adsorbent | Matting agent |
| Coating material composition P1-1 | PAE | (A1) 1-1 | | |
| Coating material composition P1-2 | PAE | (A1) 1-1 | | |
| Coating material composition P1-3 | PAE | (A1) 1-1 | | |
| Coating material composition P1-4 | PAE | (A2) 1-1 | | |
| Coating material composition P1-5 | PAE | (A1) 1-1 | | |
| Coating material composition P1-6 | PAE | (A2) 1-1 | 0.6% by mass | |
| Coating material composition P1-7 | PAE | (A2) 1-1 | | |
| Coating material composition P1-8 | PAE | (A2) 1-1 | | |
| Coating material composition P1-9 | PAE | (A2) 1-1 | | |
| Coating material composition P1-11 | PAE | (A1) 1-1 | | |
| Coating material composition P1-12 | PAE | (A1) 1-1 | | |
| Coating material composition P1-13 | PAE | (A2) 1-1 | | |
| Coating material composition P1-14 | PAE | (A1) 1-1 | | |

[Table 1-4]

| | Main agent | Curing agent | Additive component | |
|---|---|---|---|---|
| | | | Adsorbent | Matting agent |
| Coating material composition 1-1 | PAE | Example 1-1 | | |
| Coating material composition 1-2 | PAE | Example 1-2 | | |
| Coating material composition 1-3 | PAE | Example 1-3 | | |
| Coating material composition 1-4 | PAE | Example 1-4 | | |
| Coating material composition 1-5 | PAE | Example 1-5 | | |
| Coating material composition 1-6 | PAE | Example 1-6 | 0.6% by mass | |
| Coating material composition 1-7 | PAE | Example 1-7 | | 10% by mass |
| Coating material composition 1-8 | PAE | Example 1-8 | | |
| Coating material composition1-9 | PAE | Example 1-9 | | |
| Coating material composition 1-11 | PAE | Comparative Example 1-1 | | |
| Coating material composition 1-12 | PAE | Comparative Example 1-2 | | |
| Coating material composition 1-13 | PAE | Comparative Example 1-3 | | |

(continued)

| | Main agent | Curing agent | Additive component | |
|---|---|---|---|---|
| | | | Adsorbent | Matting agent |
| Coating material composition 1-14 | PAE | Comparative Example 1-4 | | |

<<Evaluation of physical properties of coating film>>

(Preparation of white plate)

A white plate was prepared as a base material by spray-coating a commercially-available solvent-based two-component acrylic urethane white enamel coating material on an aluminum plate in advance, setting it, carrying out baking at 80°C for two hours, curing the resultant at room temperature for two weeks or more, and then polishing the surface thereof with #1000 sandpaper until the gloss value at 60° became 10% or less.

[Weather resistance]

Each of the obtained coating material compositions was applied on the white plate with an applicator such that the dried film thickness became 80 μm or more and 100 μm or less, and then dried at 23°C for seven days to obtain a cured coating film. Thereafter, the time when the gloss retention rate became 80% or less was evaluated using a dewpanel light control weather meter FDP manufactured by Suga Test Instruments Co., Ltd., under conditions of JIS K5600-7-8.

[Breaking elongation]

Each of the obtained coating material compositions was applied with an applicator such that the dried film thickness became 80 μm or more and 100 μm or less, and dried at 23°C for seven days to obtain each cured film.
The breaking elongation of the obtained cured film was measured using Tensilon manufactured by ORIENTEC CO., LTD., under the following measurement conditions.

Measurement conditions
Chuck distance: 20 mm
Speed: 20 mm/minute
Measurement temperatures: 23°C and -20°C

In Table 1-5 and Table 1-6, values of the breaking elongation (unit: %) at 23°C and -20°C are shown, respectively.

[Evaluation of elongation percentage]

The elongation percentage (unit: %) was calculated from the breaking elongation at 23°C of the coating film 1-1 and that of the coating film P1-1 in accordance with the following equation.

(Breaking elongation of the coating film 1-1 / breaking elongation of the coating film P1-1) × 100

Each elongation percentage of subsequent coating films 1-2 to 1-6, 1-8, 1-9, 1-11 to 1-15, P1-2 to P1-6, P1-8, P1-9, and P1-11 to P1-14 was calculated in a similar manner.
The calculated elongation percentage was evaluated in accordance with the following criteria.

○: The elongation percentage was 110% or more.

△: The elongation percentage was 100% or more and less than 110%.

×: The elongation percentage was less than 100%.

[Glossiness (60°)]

Each of the obtained coating material composition P1-7 and the coating material composition 1-7 was applied on an ABS plate (black, Mitsubishi Plastics 802) with an applicator such that the dried film thickness became 80 μm or more

and 100 μm or less, and dried at 23°C for seven days to obtain a cured coating film, coating film P1-7 or coating film 1-7. Thereafter, the gloss value at 60° was evaluated with a gloss meter (Haze-Gloss, manufactured by BYK Gardner GmbH.).

[Table 1-5]

| | | Coating film P1-1 | Coating film P1-2 | Coating film P1-3 | Coating film P1-4 | Coating film P1-5 | Coating film P1-6 | Coating film P1-7 |
|---|---|---|---|---|---|---|---|---|
| Comparative coating film | Coating material composition | P1-1 | P1-2 | P1-3 | P1-4 | P1-5 | P1-6 | P1-7 |
| | Breaking elongation (23°C) | 309 | 309 | 309 | 380 | 309 | 232 | - |
| | Breaking elongation (-20°C) | 182 | 182 | 182 | 350 | 182 | 120 | - |
| | Weather resistance | 2000 hours or more | 2000 hours or more | 2000 hours or more | 2000 hours or more | 2000 hours or more | 2000 hours or more | - |
| | Glossiness (60°) | - | - | - | - | - | - | 90 |

| | | Coating film 1-1 | Coating film 1-2 | Coating film 1-3 | Coating film 1-4 | Coating film 1-5 | Coating film 1-6 | Coating film 1-7 |
|---|---|---|---|---|---|---|---|---|
| Coating film | Coating material composition | 1-1 | 1-2 | 1-3 | 1-4 | 1-5 | 1-6 | 1-7 |
| | Breaking elongation (23°C) | 384 | 372 | 410 | 421 | 334 | 275 | - |
| | Elongation percentage | 124% | 120% | 133% | 111% | 108% | 118% | - |
| | Evaluation of elongation | ○ | ○ | ○ | ○ | Δ | ○ | - |
| | Breaking elongation (-20°C) | 187 | 180 | 162 | 247 | 184 | 110 | - |
| | Weather resistance | 2000 hours or more | 2000 hours or more | 2000 hours or more | 1850 hours or more | 2000 hours or more | 1850 hours or more | |
| | Glossiness (60°) | - | - | - | - | - | - | 13 |

[Table 1-6]

| | | Coating film P1-8 | Coating film P1-9 | Coating film P1-11 | Coating film P1-12 | Coating film P1-13 | Coating film P1-14 |
|---|---|---|---|---|---|---|---|
| Comparative coating film | Coating material composition | P1-8 | P1-9 | P1-11 | P1-12 | P1-13 | P1-14 |
| | Breaking elongation (23°C) | 380 | 380 | 309 | 309 | 380 | 309 |
| | Breaking elongation (-20°C) | 350 | 350 | 182 | 182 | 250 | 182 |
| | Weather resistance | 2000 hours or more | 2000 hours or more | 2000 hours or more | 2000 hours or more | 2000 hours or more | 2000 hours or more |
| | Glossiness (60°) | - | - | - | - | - | - |
| | | Coating film 1-8 | Coating film 1-9 | Coating film 1-11 | Coating film 1-12 | Coating film 1-13 | Coating film 1-14 |
| Coating film | Coating material composition | 1-8 | 1-9 | 1-11 | 1-12 | 1-13 | 1-14 |
| | Breaking elongation (23°C) | 419 | 400 | - | 273 | - | 300 |
| | Elongation percentage | 110% | 103% | - | 88% | - | 97% |
| | Evaluation of elongation | ○ | Δ | - | × | - | × |
| | Breaking elongation (-20°C) | 360 | 350 | - | 62 | - | 143 |
| | Weather resistance | 2000 hours or more | 2000 hours or more | - | 750 hours | - | 750 hours |
| | Glossiness (60°) | - | - | - | - | - | - |

As shown in the above results, it was confirmed that when the polyisocyanate composition of the present embodiment (first embodiment) was used as a curing agent of a polyaspartic paint composition, a coating film having excellent weather resistance and elongation percentage was obtained.

<Synthesis Example 2-1>

A component (A1) 2-1 as the component (A) was synthesized by the following method.

A four-necked flask equipped with a stirrer, a thermometer, a reflux condenser, a nitrogen blowing tube, and a dropping funnel was filled with nitrogen, 430.0 parts of HDI, 73.9 parts of polycaprolactone diol having a number-average molecular weight of 400 and a hydroxyl value of 283, and being obtained from ε-caprolactone and 1,4-butanediol, and 73.9 parts of polycaprolactone diol having a number-average molecular weight of 830 and a hydroxyl value of 131, and being obtained from ε-caprolactone and diethylene glycol were charged, and the temperature inside the reactor was kept at 100°C for 120 minutes while stirring to allow a urethane reaction to proceed. The cooled reaction liquid was filtered, and then unreacted HDI was removed using a thin-film evaporator. The polyisocyanate (A1) 2-1 was obtained, in which the NCO content was 9.1% by mass, the viscosity at 25°C was 1555 mPa.s, the number-average molecular weight was 1297, and the average number of isocyanate groups was 2.8.

<Synthesis Example 2-2>

A component (A1) 2-2 as the component (A) was synthesized by the following method.

A four-necked flask equipped with a stirrer, a thermometer, a reflux condenser, a nitrogen blowing tube, and a dropping funnel was filled with nitrogen, 450.0 parts of HDI, 66.3 parts of polycaprolactone diol having a number-average molecular weight of 400 and a hydroxyl value of 283, and being obtained from ε-caprolactone and 1,4-butanediol, and 66.3 parts of polyester diol having a number-average molecular weight of 500 and a hydroxyl value of 223, and being obtained from adipic acid and 3-methyl-1,5-pentanediol were charged, the temperature inside the reactor was kept at 100°C for 120 minutes while stirring to allow a urethane reaction to proceed. The cooled reaction liquid was filtered, and then unreacted HDI was removed using a thin-film evaporator. The polyisocyanate (A1) 2-2 was obtained, in which the NCO content was 10.6% by mass, the viscosity at 25°C was 1734 mPa.s, the number-average molecular weight was 1165, and the average number of isocyanate groups was 2.9.

<Synthesis Example 2-3>

A component (A1) 2-3 as the component (A) was synthesized by the following method.

A four-necked flask equipped with a stirrer, a thermometer, a reflux condenser, a nitrogen blowing tube, and a dropping funnel was filled with nitrogen, 420.0 parts of HDI, and 170.0 parts of polycaprolactone diol having a number-average molecular weight of 830 and a hydroxyl value of 131, and being obtained from ε-caprolactone and diethylene glycol were charged, and then the temperature inside the reactor was kept at 100°C for 120 minutes while stirring to allow a urethane-forming reaction to proceed. The cooled reaction liquid was filtered, and then unreacted HDI was removed using a thin-film evaporator. The polyisocyanate (A1) 2-3 was obtained, in which the NCO content was 7.0% by mass, the viscosity at 25°C was 2009 mPa.s, the number-average molecular weight was 1623, and the average number of isocyanate groups was 2.7.

<Synthesis Example 2-4>

A component (A2) 2-1 as the component (A) was synthesized by the following method.

A four-necked flask equipped with a stirrer, a thermometer, a reflux condenser, a nitrogen blowing tube, and a dropping funnel was filled with nitrogen, 440.0 parts pf HDI, 74.0 parts of polycaprolactone diol having a number-average molecular weight of 400 and a hydroxyl value of 283, and being obtained from ε-caprolactone and 1,4-butanediol, and 74.0 parts of polypropylene glycol having a number-average molecular weight of 1000 and a hydroxyl value of 111 were charged, and the temperature inside the reactor was kept at 100°C for 120 minutes while stirring to allow a urethane reaction to proceed. The cooled reaction liquid was filtered, and then unreacted HDI was removed using a thin-film evaporator. The polyisocyanate (A2) 2-1 was obtained, in which the NCO content was 9.5% by mass, the viscosity at 25°C was 1269 mPa.s, the number-average molecular weight was 1243, and the average number of isocyanate groups was 2.8.

<Synthesis Example 2-5>

A component (A2) 2-2 as the component (A) was synthesized by the following method.

A four-necked flask equipped with a stirrer, a thermometer, a reflux condenser, a nitrogen blowing tube, and a dropping funnel was filled with nitrogen, 470.0 parts of HDI, 56.9 parts of polycaprolactone diol having a number-average molecular weight of 550 and a hydroxyl value of 208, and being obtained from ε-caprolactone and diethylene glycol, and 56.9 parts of polypropylene glycol having a number-average molecular weight of 227 and a hydroxyl value of 494 were charged, and the temperature inside the reactor was kept at 100°C for 120 minutes while stirring to allow a urethane reaction to proceed. The cooled reaction liquid was filtered, and then unreacted HDI was removed using a thin-film evaporator. The polyisocyanate (A2) 2-2 was obtained, in which the NCO content was 11.9% by mass, the viscosity at 25°C was 1148 mPa.s, the number-average molecular weight was 942, and the average number of isocyanate groups was 2.7.

<Synthesis Example 2-6>

A component (A2) 2-3 as the component (A) was synthesized by the following method.

A four-necked flask equipped with a stirrer, a thermometer, a reflux condenser, a nitrogen blowing tube, and a dropping funnel was filled with nitrogen, 420.0 parts of HDI, 68.9 parts of polycaprolactone diol having a number-average molecular weight of 400 and a hydroxyl value of 283, and being obtained from ε-caprolactone and 1,4-butanediol, and 68.9 parts of polytetramethylene glycol having a number-average molecular weight of 655 and a hydroxyl value of 172 were charged, and the temperature inside the reactor was kept at 100°C for 120 minutes while stirring to allow a urethane reaction to proceed. The cooled reaction liquid was filtered, and then unreacted HDI was removed using a thin-film

evaporator. The polyisocyanate (A2) 2-3 was obtained, in which the NCO content was 9.5% by mass, the viscosity at 25°C was 1269 mPa.s, the number-average molecular weight was 1243, and the average number of isocyanate groups was 2.8.

<Synthesis Example 2-7>

A component (A1) 2-4 as the component (A) was synthesized by the following method.

A four-necked flask equipped with a stirrer, a thermometer, a reflux condenser, a nitrogen blowing tube, and a dropping funnel was filled with nitrogen, 430.0 parts of HDI, 64.9 parts of polycaprolactone diol having a number-average molecular weight of 400 and a hydroxyl value of 283, and being obtained from ε-caprolactone and 1,4-butanediol, and 64.9 parts of polycaprolactone diol having a number-average molecular weight of 550 and a hydroxyl value of 208, and being obtained from ε-caprolactone and diethylene glycol were charged, and the temperature inside the reactor was kept at 100°C for 120 minutes while stirring to allow a urethane reaction to proceed. The cooled reaction liquid was filtered, and then unreacted HDI was removed using a thin-film evaporator. The polyisocyanate (A1) 2-4 was obtained, in which the NCO content was 9.9% by mass, the viscosity at 25°C was 1400 mPa.s, the number-average molecular weight was 1143, and the average number of isocyanate groups was 2.7.

<Synthesis Example 2-8>

A component (A1) 2-5 as the component (A) was synthesized by the following method.

A four-necked flask equipped with a stirrer, a thermometer, a reflux condenser, a nitrogen blowing tube, and a dropping funnel was filled with nitrogen, 400.0 parts of HDI, and 125.0 parts of polyester diol having a number-average molecular weight of 490 and a hydroxyl value of 223, and being obtained from sebacic acid and 3-methyl-1,5-pentanediol were charged, and the temperature inside the reactor was kept at 100°C for 120 minutes while stirring to allow a urethane-forming reaction to proceed. The cooled reaction liquid was filtered, and then unreacted HDI was removed using a thin-film evaporator. The polyisocyanate (A1) 2-5 was obtained, in which the NCO content was 9.8% by mass, the viscosity at 25°C was 1755 mPa.s, the number-average molecular weight was 1198, and the average number of isocyanate groups was 2.8.

<Synthesis Example 2-9>

A component (A1) 2-6 as the component (A) was synthesized by the following method.

A four-necked flask equipped with a stirrer, a thermometer, a reflux condenser, a nitrogen blowing tube, and a dropping funnel was filled with nitrogen, 400.0 parts of HDI, and 127.0 parts of polyester diol having a number-average molecular weight of 504 and a hydroxyl value of 223, and being obtained from adipic acid and 3-methyl-1,5-pentanediol were charged, and the temperature inside the reactor was kept at 100°C for 120 minutes while stirring, to allow a urethane-forming reaction to proceed. The cooled reaction liquid was filtered, and then unreacted HDI was removed using a thin-film evaporator. The polyisocyanate (A1) 2-6 was obtained, in which the NCO content was 9.9% by mass, the viscosity at 25°C was 2010 mPa.s, the number-average molecular weight was 929, and the average number of isocyanate groups was 2.2.

<Synthesis Example 2-10>

A component (A1) 2-7 as the component (A) was synthesized by the following method.

A four-necked flask equipped with a stirrer, a thermometer, a reflux condenser, a nitrogen blowing tube, and a dropping funnel was filled with nitrogen, 400.0 parts of HDI, 95.1 parts of polycaprolactone diol having a number-average molecular weight of 550 and a hydroxyl value of 208, and being obtained from ε-caprolactone and diethylene glycol, and 10.6 parts of 1,3-butanediol were charged, and the temperature inside the reactor was kept at 100°C for 120 minutes while stirring, to allow a urethane-forming reaction to proceed. The cooled reaction liquid was filtered, and then unreacted HDI was removed using a thin-film evaporator. The polyisocyanate (A1) 2-7 was obtained, in which the NCO content was 11.0% by mass, the viscosity at 25°C was 1511 mPa.s, the number-average molecular weight was 976, and the average number of isocyanate groups was 2.6.

<Synthesis Example 2-11>

A component (A1) 2-8 as the component (A) was synthesized by the following method.

A four-necked flask equipped with a stirrer, a thermometer, a reflux condenser, a nitrogen blowing tube, and a dropping funnel was filled with nitrogen, 400.0 parts of HDI, and 130.0 parts of polycaprolactone diol having a number-average molecular weight of 550 and a hydroxyl value of 208, and being obtained from ε-caprolactone and diethylene glycol were charged, and the temperature inside the reactor was kept at 100°C for 120 minutes while stirring to allow a urethane-forming reaction to proceed. The cooled reaction liquid was filtered, and then unreacted HDI was removed using

a thin-film evaporator. The polyisocyanate (A1) 2-8 was obtained, in which the NCO content was 9.1% by mass, the viscosity at 25°C was 1462 mPa.s, the number-average molecular weight was 1178, and the average number of isocyanate groups was 2.6.

<Synthesis Example 2-12>

A component (B) 2-1 as the component (B) was synthesized by the following method.

The inside of a four-neck flask equipped with a stirrer, a thermometer, and a cooling tube was replaced with nitrogen, 2700 g of HDI, and 210 g of 2-ethyl-1-hexanol were charged, and a urethane-forming reaction was allowed to proceed at 130°C for one hour while stirring. 0.54 g of a solution containing 20% of solid contents of zirconyl 2-ethylhexanoate in mineral spirits was added thereto as an allophanate-forming catalyst. When the refractive index of the reaction liquid was increased to 0.0055, 0.81 g (4.0 times the molar amount relative to the catalyst) of a solution containing 50% of dodecyl phosphate in isobutanol (a dilution in which "JP-512", tradename, manufactured by JOHOKU CHEMICAL CO., LTD., was diluted with isobutanol) was added to the reaction liquid to stop the reaction. After the reaction liquid was filtered, unreacted HDI was removed using a falling thin film distillation apparatus at 160°C (27 Pa) the first time, and at 150°C (13Pa) the second time. The obtained polyisocyanate was a transparent liquid, the yield thereof was 770 g , the viscosity thereof was 110 mPa.s, and the NCO content thereof was 17.2%. When measured by NMR, the molar ratio of allophanate groups/isocyanurate groups was 97/3. The obtained polyisocyanate was referred to as the component (B) 2-1.

Tinuvin 765 manufactured by BASF JAPAN LTD., was prepared as a light stabilizer.

<Examples 2-1 to 2-14, and Comparative Examples 2-1 to 2-2>

Polyisocyanate compositions of Examples 2-1 to 2-14 and Comparative Examples 2-1 to 2-2 were obtained using polyisocyanates (A1) 2-1 to (A1) 2-8, (A2) 2-1 to (A2) 2-3, and (B) 2-1 and an optional light stabilizer.

The mixing ratio of each component, the physical properties of the component (A) alone, and the physical properties of the polyisocyanate composition are shown in the following Tables 2-1 to 2-3.

[Table 2-1]

| | | Example 2-1 | Example 2-2 | Example 2-3 | Example 2-4 | Example 2-5 | Example 2-6 | Example 2-7 |
|---|---|---|---|---|---|---|---|---|
| Component (A) | Type | (A1) 2-1 | (A1) 2-2 | (A2) 2-1 | (A2) 2-1 | (A2) 2-2 | (A1) 2-1 | (A1) 2-3 |
| | Amount (parts) | 70 | 70 | 70 | 70 | 70 | 90 | 70 |
| Component (B) | Type | (B) 2-1 | (B) 2-1 | (B) 2-1 | (B) 2-1 | (B) 2-1 | (B) 2-1 | (B) 2-1 |
| | Amount (parts) | 30 | 30 | 30 | 30 | 30 | 10 | 30 |
| Optional component | Type | - | | - | Tinuvin 765 | - | - | - |
| | Amount | 0 | | 0 | 10000 ppm | 0 | 0 | 0 |

(continued)

| | | Example 2-1 | Example 2-2 | Example 2-3 | Example 2-4 | Example 2-5 | Example 2-6 | Example 2-7 |
|---|---|---|---|---|---|---|---|---|
| Physical properties of component (A) alone | Physical property 2-1 | 9.1% | 10.6% | 8.7% | 8.7% | 11.9% | 9.1% | 7.0% |
| | Physical property 2-2 | 1555 | 1734 | 1742 | 1742 | 1148 | 1555 | 2009 |
| | Physical property 2-3 | 1277 | 1165 | 1314 | 1314 | 942 | 1277 | 1623 |
| | Physical property 2-4 | 2.8 | 2.9 | 2.7 | 2.7 | 2.7 | 2.8 | 2.7 |
| | Physical property 2-5 | 0.3 | 0.5 | 0.2 | 0.2 | 0.4 | 0.3 | 0.3 |
| | External appearance (23°C) | × | × | × | × | × | × | × |
| Physical properties of polyisocyanate composition | Physical property 2-1 | 11.4% | 12.5% | 11.3% | 11.2% | 13.4% | 9.9% | 8.0% |
| | Physical property 2-2 | 1151 | 870 | 1208 | 1210 | 796 | 1193 | 1487 |
| | Physical property 2-4 | 2.6 | 2.7 | 2.5 | 2.5 | 2.5 | 2.7 | 2.6 |
| | External appearance (23°C) | ○ | ○ | ○ | ○ | ○ | Δ | Δ |

[Table 2-2]

| | | Example 2-8 | Example 2-9 | Example 2-10 | Example 2-11 | Example 2-12 | Example 2-13 | Example 2-14 |
|---|---|---|---|---|---|---|---|---|
| Component (A) | Type | (A2) 2-3 | (A1) 2-4 | (A1) 2-5 | (A1) 2-5 | (A1) 2-6 | (A1) 2-7 | (A1) 2-8 |
| | Amount (parts) | 70 | 70 | 95 | 99 | 85 | 90 | 70 |
| Component (B) | Type | (B) 2-1 | (B) 2-1 | (B) 2-1 | (B) 2-1 | (B) 2-1 | (B) 2-1 | (B) 2-1 |
| | Amount (parts) | 30 | 30 | 5 | 1 | 15 | 10 | 30 |
| Optional component | Type | - | - | - | - | - | - | - |
| | Amount | 0 | 0 | 0 | 0 | 0 | 0 | 0 |

(continued)

| | | Example 2-8 | Example 2-9 | Example 2-10 | Example 2-11 | Example 2-12 | Example 2-13 | Example 2-14 |
|---|---|---|---|---|---|---|---|---|
| Physical properties of component (A) alone | Physical property 2-1 | 9.5% | 9.9% | 9.8% | 9.8% | 9.9% | 11.0% | 9.1% |
| | Physical property 2-2 | 1269 | 1400 | 1755 | 1755 | 2010 | 1560 | 1462 |
| | Physical property 2-3 | 1243 | 1143 | 1198 | 1198 | 929 | 976 | 1178 |
| | Physical property 2-4 | 2.8 | 2.7 | 2.8 | 2.8 | 2.2 | 2.6 | 2.6 |
| | Physical property 2-5 | 0.2 | 0.5 | 0.3 | 0.3 | 0.3 | 0.3 | 0.4 |
| | External appearance (23°C) | × | × | ○ | ○ | Δ | ○ | Δ |
| Physical properties of polyisocyanate composition | Physical property 2-1 | 11.8% | 12.1% | 10.1% | 9.8% | 11.0% | 11.6% | 11.5% |
| | Physical property 2-2 | 880 | 650 | 1638 | 1707 | 1453 | 1312 | 713 |
| | Physical property 2-4 | 2.6 | 2.5 | 2.8 | 2.8 | 2.2 | 2.5 | 2.6 |
| | External appearance (23°C) | ○ | ○ | ○ | ○ | ○ | ○ | ○ |

[Table 2-3]

| | | Comparative Example 2-1 | Comparative Example 2-2 |
|---|---|---|---|
| Component (A) | Type | (A1) 2-1 | (A1) 2-1 |
| | Amount (parts) | 50 | 30 |
| Component (B) | Type | (B) 2-1 | (B) 2-1 |
| | Amount (parts) | 50 | 70 |
| Optional component | Type | - | - |
| | Amount | 0 | 0 |
| Physical properties of component (A) alone | Physical property 2-1 | 9.1% | 9.1% |
| | Physical property 2-2 | 1555 | 1555 |
| | Physical property 2-3 | 1277 | 1277 |
| | Physical property 2-4 | 2.8 | 2.8 |
| | Physical property 2-5 | 0.3 | 0.3 |
| | appearance External appearance (23°C) | × | × |
| Physical properties of polyisocyanate composition | Physical property 2-1 | 13.2% | 14.8% |
| | Physical property 2-2 | 410 | 240 |
| | Physical property 2-4 | 2.4 | 2.3 |
| | External appearance (23°C) | ○ | ○ |

In Tables 2-1 to 2-3, physical properties 2-1 to 2-5 refer to the following physical properties.

(Physical property 2-1) NCO content (% by mass)

The NCO content was determined in the same way as that of Physical property 1-1.

(Physical property 2-2) Viscosity (mPa.s)

The viscosity was measured in the same way as that of Physical property 1-2.

(Physical property 2-3) Number-average molecular weight

The number-average molecular weight of the polyisocyanate was determined in the same way as that of Physical property 1-3.

(Physical property 2-4) Average number of isocyanate groups

The average number of isocyanate groups in the polyisocyanate was determined in the same way as that of Physical property 1-4.

(Physical property 2-5) Mass concentration of diisocyanate monomers (% by mass)

The mass concentration of diisocyanates in the polyisocyanate was determined in the same way as that of Physical property 1-5.

(Evaluation of external appearance)

The component (A) immediately after production or the polyisocyanate composition immediately after production was placed at a temperature of 23°C, and the transmittance thereof was measured and evaluated in accordance with the following criteria. A higher transmittance value indicates higher transparency.

Apparatus: JASCO V-650, ultraviolet visible spectrophotometer manufactured by JASCO Corporation
Measurement wavelength: 550 nm
Cell length: 20 mm
◦: 90% or more
△: 60% or more and less than 90%
×: Less than 60%

<Production of coating material composition>

As a main agent, "FEISARATIC F420" (an aspartic acid ester compound, tradename, manufactured by Zhuhai Feiyang Protech CORP., LTD, in which the amine value was 201 mgKOH / g of resin) was used. In Table 2-4 and Table 2-5, an aspartic acid ester compound is referred to as "PAE".
As a curing agent, the above-obtained component (A) or polyisocyanate composition was used. Specific materials are shown in Table 2-4 and Table 2-5.
The main agent and the curing agent were blended such that the ratio of NCO/NH was 1.1, and the solid content of the coating material was adjusted to 90% by mass with n-butyl acetate, thereby obtaining each of coating material compositions P2-1 to P2-10, and P2-12 to P2-18, and coating material compositions 2-1 to 2-10, and 2-12 to 2-18.
The main agent and the curing agent were blended such that the ratio of NCO/NH was 1.1, and the solid content of the coating material was adjusted to 80% by mass with n-butyl acetate, thereby obtaining a coating material composition P2-11 and a coating material composition 2-11.
The additive components (an adsorbent and a matting agent) in the coating material composition shown in Table 2-4 and Table 2-5 are the following materials.

Adsorbent: molecular sieve, 3A Powder (having a pore size of approximately 3 angstroms) manufactured by Union Showa K.K.
Matting agent: ACEMATT 3400 manufactured by Evonik Japan Co., Ltd.

The amount of the additive component in Table 2-4 and Table 2-5 is the ratio of the additive component relative to the total amount of the solid content of the coating material composition.

[Table 2-4]

| | Main agent | Curing agent | Additive component | |
|---|---|---|---|---|
| | | | Adsorbent | Matting agent |
| Coating material composition P2-1 | PAE | (A1) 2-1 | | |
| Coating material composition P2-2 | PAE | (A1) 2-2 | | |
| Coating material composition P2-3 | PAE | (A2) 2-1 | | |
| Coating material composition P2-4 | PAE | (A2) 2-1 | | |
| Coating material composition P2-5 | PAE | (A2) 2-2 | | |
| Coating material composition P2-6 | PAE | (A1) 2-1 | | |
| Coating material composition P2-7 | PAE | (A1) 2-3 | | |
| Coating material composition P2-8 | PAE | (A2) 2-3 | | |
| Coating material composition P2-9 | PAE | (A1) 2-1 | 0.6% by mass | |
| Coating material composition P2-10 | PAE | (A1) 2-4 | | |
| Coating material composition P2-11 | PAE | (A1) 2-1 | | |
| Coating material composition P2-12 | PAE | (A1) 2-5 | | |
| Coating material composition P2-13 | PAE | (A1) 2-5 | | |
| Coating material composition P2-14 | PAE | (A1) 2-6 | | |
| Coating material composition P2-15 | PAE | (A1) 2-7 | | |
| Coating material composition P2-16 | PAE | (A1) 2-8 | | |
| Coating material composition P2-17 | PAE | (A1) 2-1 | | |
| Coating material composition P2-18 | PAE | (A1) d2-1 | | |

[Table 2-5]

| | Main agent | Curing agent | Additive component | |
|---|---|---|---|---|
| | | | Adsorbent | Matting agent |
| Coating material composition 2-1 | PAE | Example 1 | | |
| Coating material composition 2-2 | PAE | Example 2 | | |
| Coating material composition 2-3 | PAE | Example 3 | | |
| Coating material composition 2-4 | PAE | Example 4 | | |
| Coating material composition 2-5 | PAE | Example 5 | | |
| Coating material composition 2-6 | PAE | Example 6 | | |
| Coating material composition 2-7 | PAE | Example 7 | | |
| Coating material composition 2-8 | PAE | Example 8 | | |
| Coating material composition 2-9 | PAE | Example 1 | 0.6% by mass | |
| Coating material composition 2-10 | PAE | Example 9 | | |
| Coating material composition 2-11 | PAE | Example 1 | | 10% by mass |
| Coating material composition 2-12 | PAE | Example 10 | | |
| Coating material composition 2-13 | PAE | Example 11 | | |
| Coating material composition 2-14 | PAE | Example 12 | | |

(continued)

| | Main agent | Curing agent | Additive component | |
|---|---|---|---|---|
| | | | Adsorbent | Matting agent |
| Coating material composition 2-15 | PAE | Example 13 | | |
| Coating material composition 2-16 | PAE | Example 14 | | |
| Coating material composition 2-17 | PAE | Comparative Example 1 | | |
| Coating material composition 2-18 | PAE | Comparative Example 2 | | |

<<Evaluation of physical properties of coating film>>

(Preparation of white plate)

A white plate was prepared as a base material by spray-coating a commercially-available solvent-based two-component acrylic urethane white enamel coating material on an aluminum plate in advance, setting it, carrying out baking at 80°C for two hours, curing the resultant at room temperature for two weeks or more, and then polishing the surface thereof with #1000 sandpaper until the gloss value at 60° became 10% or less.

[Weather resistance]

Each of the obtained coating material compositions was applied on the white plate with an applicator such that the dried film thickness became 80 μm or more and 100 μm or less, and then dried at 23°C for seven days to obtain a cured coating film. Thereafter, the time when the gloss retention rate became 80% or less was evaluated using a dewpanel light control weather meter FDP manufactured by Suga Test Instruments Co., Ltd., under conditions of JIS K5600-7-8.

[Breaking elongation]

Each of the obtained coating material compositions was applied with an applicator such that the dried film thickness became 80 μm or more and 100 μm or less, and dried at 23°C for seven days to obtain each cured film.
The breaking elongation of the obtained cured film was measured using Tensilon manufactured by ORIENTEC CO., LTD., under the following measurement conditions.

Measurement conditions
Chuck distance: 20 mm
Speed: 20 mm/minute
Measurement temperatures: 23°C and -20°C

In Table 2-6 to Table 2-8, values of the breaking elongation (unit: %) at 23°C and -20°C were described, respectively.

[Evaluation of elongation percentage]

The elongation percentage (unit: %) was calculated from the breaking elongation at 23°C of the coating film 2-1 and that of the coating film P2-1 in accordance with the following equation.

(Breaking elongation of the coating film 2-1 / breaking elongation of the coating film P2-1) × 100

Each elongation percentage of subsequent coating films 2-2 to 2-10, 2-12 to 2-18, P2-2 to P2-10, and P2-12 to P2-18 was calculated in a similar manner.
The calculated elongation percentage was evaluated in accordance with the following criteria.

○: The elongation percentage was 110% or more.

△: The elongation percentage was 100% or more and less than 110%.

×: The elongation percentage was less than 100%.

[Glossiness (gloss value at 60°)]

Each of the obtained coating material composition P2-11 and the coating material composition 2-11 was applied on an ABS plate (black, Mitsubishi Plastics 802) with an applicator such that the dried film thickness became 80 μm or more and 100 μm or less, and dried at 23°C for seven days to obtain a cured coating film, coating film P2-11 or coating film 2-11. Thereafter, the gloss value at 60° was evaluated with a gloss meter (Haze-Gloss, manufactured by BYK Gardner GmbH.).

[Table 2-6]

| | | Coating film P2-1 | Coating film P2-2 | Coating film P2-3 | Coating film P2-4 | Coating film P2-5 | Coating film P2-6 | Coating film P2-7 |
|---|---|---|---|---|---|---|---|---|
| Comparative coating film | Coating material composition | P2-1 | P2-2 | P2-3 | P2-4 | P2-5 | P2-6 | P2-7 |
| | Breaking elongation (23°C) | 682 | 542 | 1020 | 1018 | 361 | 682 | 912 |
| | Breaking elongation (-20°C) | 677 | 409 | 691 | 689 | 186 | 677 | 651 |
| | Weather resistance | 750 hours | 2000 hours or more | 500 hours | 1000 hours | 750 hours | 750 hours | 1500 hours |
| | Glossiness (60°) | - | - | - | - | - | - | - |
| | | Coating film 2-1 | Coating film 2-2 | Coating film 2-3 | Coating film 2-4 | Coating film 2-5 | Coating film 2-6 | Coating film 2-7 |
| Coating film | Coating material composition | 2-1 | 2-2 | 2-3 | 2-4 | 2-5 | 2-6 | 2-7 |
| | Breaking elongation (23°C) | 848 | 605 | 1130 | 1133 | 589 | 710 | 1133 |
| | Elongation percentage | 124% | 112% | 111% | 111% | 163% | 104% | 124% |
| | Evaluation of elongation | ○ | ○ | ○ | ○ | ○ | △ | ○ |
| | Breaking elongation (-20°C) | 696 | 279 | 488 | 490 | 330 | 680 | 669 |
| | Weather resistance | 750 hours | 2000 hours or more | 500 hours | 1000 hours | 750 hours | 750 hours | 1500 hours |
| | Glossiness (60°) | - | - | - | - | - | - | - |

[Table 2-7]

| | | Coating film P2-8 | Coating film P2-9 | Coating film P2-10 | Coating film P2-11 | Coating film P2-12 | Coating film P2-13 | Coating film P2-14 |
|---|---|---|---|---|---|---|---|---|
| Comparative coating film | Coating material composition | P2-8 | P2-9 | P2-10 | P2-11 | P2-12 | P2-13 | P2-14 |
| | Breaking elongation (23°C) | 860 | 491 | 684 | - | 633 | 581 | 480 |
| | Breaking elongation (-20°C) | 313 | 38 | 388 | - | 293 | 279 | 326 |
| | Weather resistance | 1000 hours | 750 hours | 2000 hours or more | - | 1500 hours | 1500 hours | 2000 hours |
| | Glossiness (60°) | - | - | - | 90% | - | - | - |
| | | Coating film 2-8 | Coating film 2-9 | Coating film 2-10 | Coating film 2-11 | Coating film 2-12 | Coating film 2-13 | Coating film 2-14 |
| Coating film | Coating material composition | 2-8 | 2-9 | 2-10 | 2-11 | 2-12 | 2-13 | 2-14 |
| | Breaking elongation (23°C) | 973 | 622 | 1083 | - | 678 | 640 | 565 |
| | Elongation percentage | 113% | 127% | 158% | - | 107% | 101% | 118% |
| | Evaluation of elongation | ○ | ○ | ○ | - | Δ | Δ | ○ |
| | Breaking elongation (-20°C) | 221 | 33 | 313 | - | 288 | 290 | 431 |
| | Weather resistance | 1000 hours | 750 hours | 2000 hours or more | - | 1500 hours | 1500 hours | 2000 hours |
| | Glossiness (60°) | - | - | - | 16% | - | - | - |

[Table 2-8]

| | | Coating film P2-15 | Coating film P2-16 | Coating film P2-17 | Coating film P2-18 |
|---|---|---|---|---|---|
| Comparative coating film | Coating material composition | P2-15 | P2-16 | P2-17 | P2-18 |
| | Breaking elongation (23°C) | 540 | 763 | 682 | 682 |
| | Breaking elongation (-20°C) | 171 | 342 | 677 | 677 |
| | Weather resistance | 1500 hours | 2000 hours or more | 750 hours | 750 hours |
| | Glossiness (60°) | - | - | - | - |
| | | Coating film 2-15 | Coating film 2-16 | Coating film 2-17 | Coating film 2-18 |
| Coating film | Coating material composition | 2-15 | 2-16 | 2-17 | 2-18 |
| | Breaking elongation (23°C) | 581 | 838 | 670 | 555 |
| | Elongation percentage | 108% | 110% | 98% | 81% |
| | Evaluation of elongation | Δ | ○ | × | × |
| | Breaking elongation (-20°C) | 279 | 247 | 532 | 327 |
| | Weather resistance | 1500 hours | 2000 hours | 250 hours | 250 hours or less |
| | Glossiness (60°) | - | - | - | - |

As shown in the results above, it was confirmed that the polyisocyanate composition of the present embodiment (second embodiment) had an external appearance with excellent transparency, and when used as a curing agent of a polyaspartic coating material composition, a coating film that exhibited an excellent elongation percentage and excellent breaking elongation at low temperatures was obtained.

INDUSTRIAL APPLICABILITY

The polyisocyanate composition of the present invention is useful as a curing agent of a polyaspartic coating material composition.

## Claims

**1.** A polyisocyanate composition comprising a component (A) and a component (B), wherein

the component (A) is a component (A1) or a component (A2),
the component (A1) is a polyisocyanate component obtained from at least one type of diisocyanate selected from the group consisting of aliphatic diisocyanates and alicyclic diisocyanates and a polyester polyol in which an average number of functional groups is 2 or 3,
the component (A2) is a polyisocyanate component obtained from at least one type of diisocyanate selected from the group consisting of aliphatic diisocyanates and alicyclic diisocyanates, a polyester polyol in which an average number of functional groups is 2 or 3, and a polyoxyalkylene polyol in which an average number of functional groups is 2 to 4,
the component (B) is a polyisocyanate component obtained from at least one type of diisocyanate selected from

the group consisting of aliphatic diisocyanates and alicyclic diisocyanates and a C1-20 monoalcohol, a molar ratio of allophanate groups to isocyanurate groups (allophanate groups/isocyanurate groups) in the polyisocyanate component being 100/0 to 70/30, and
a ratio of the component (A) relative to a total amount of the component (A) and the component (B) is 60% by mass or more.

**2.** The polyisocyanate composition according to claim 1, wherein the average number of functional groups in the polyester polyol is 3.

**3.** The polyisocyanate composition according to claim 2, wherein a number-average molecular weight of the polyester polyol is 250 or more and 4000 or less, and
a number-average molecular weight of the polyoxyalkylene polyol is 200 or more and 1500 or less.

**4.** The polyisocyanate composition according to claim 1, wherein the average number of functional groups in the polyester polyol is 2.

**5.** The polyisocyanate composition according to claim 4, wherein a number-average molecular weight of the polyester polyol is 250 or more and 4000 or less, and
a number-average molecular weight of the polyoxyalkylene polyol is 100 or more and 2000 or less.

**6.** The polyisocyanate composition according to claim 1, further comprising one or both of an ultraviolet absorber and a light stabilizer.

**7.** A coating material composition comprising a main agent and a curing agent, wherein

the main agent is an aspartic acid ester compound of formula (I) shown below, and
the curing agent is a polyisocyanate composition of claim 1,

[Chemical formula 1]

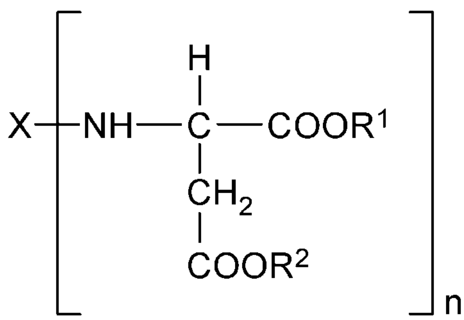

・・・(I)

(in the formula (I), X is an n-valent organic group obtained by removing a primary amino group from an n-valent polyamine, $R_1$ and $R^2$ are organic groups that are inert to isocyanate groups under reaction conditions, the organic groups being identical to or different from each other, and n is an integer of 2 or more.)

**8.** The coating material composition according to claim 7, wherein the coating material composition is a coating material

for an architectural structure.

**9.** A coating film formed by curing a coating material composition of claim 7.

## INTERNATIONAL SEARCH REPORT

International application No.
**PCT/JP2023/045891**

**A. CLASSIFICATION OF SUBJECT MATTER**

***C08G 18/10***(2006.01)i; ***C08G 18/12***(2006.01)i; ***C08G 18/32***(2006.01)i; ***C08G 18/40***(2006.01)i; ***C08G 18/42***(2006.01)i; ***C08G 18/73***(2006.01)i; ***C08G 18/75***(2006.01)i; ***C08G 18/78***(2006.01)i; ***C09D 175/06***(2006.01)i
FI: C08G18/10; C08G18/12; C08G18/32 028; C08G18/40 018; C08G18/42; C08G18/73; C08G18/75; C08G18/78 037; C09D175/06

According to International Patent Classification (IPC) or to both national classification and IPC

**B. FIELDS SEARCHED**

Minimum documentation searched (classification system followed by classification symbols)

C08G18/10; C08G18/12; C08G18/32; C08G18/40; C08G18/42; C08G18/73; C08G18/75; C08G18/78; C09D175/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2011-001397 A (CANON CHEMICALS INC.) 06 January 2011 (2011-01-06) claims 1-9, paragraphs [0011], [0016], [0023]-[0024], [0036], example 4 | 1-9 |
| A | JP 02-001718 A (ASAHI CHEMICAL INDUSTRY CO., LTD.) 08 January 1990 (1990-01-08) p. 4, lower left column, lines 7-12, table 1 | 1-9 |
| A | JP 2007-009101 A (RAITO BLACK KK) 18 January 2007 (2007-01-18) paragraph [0033] | 1-9 |
| A | JP 2020-515679 A (MANKIEWICZ GEBR. & CO. (GMBH & CO. KG)) 28 May 2020 (2020-05-28) entire text | 1-9 |
| A | WO 2015/111709 A1 (KANSAI PAINT CO., LTD.) 30 July 2015 (2015-07-30) entire text | 1-9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2023/045891**

**C. DOCUMENTS CONSIDERED TO BE RELEVANT**

| Category* | Citation of document, with indication, where appropriate, of the relevant passages | Relevant to claim No. |
|---|---|---|
| A | WO 2022/144200 A1 (COVESTRO DEUTSCHLAND AG) 07 July 2022 (2022-07-07) entire text | 1-9 |
| A | US 2021/0277277 A1 (COVESTRO INTELLECTUAL PROPERTY GMBH & CO. KG) 09 September 2021 (2021-09-09) entire text | 1-9 |
| A | JP 2013-523972 A (BAYER MATERIALSCIENCE LLC) 17 June 2013 (2013-06-17) entire text | 1-9 |
| A | US 2011/0288217 A1 (BAYER MATERIALSCIENCE AG LAW AND PATENTS) 24 November 2011 (2011-11-24) entire text | 1-9 |

Form PCT/ISA/210 (second sheet) (July 2022)

**INTERNATIONAL SEARCH REPORT**
**Information on patent family members**

International application No.
**PCT/JP2023/045891**

| Patent document cited in search report | Publication date (day/month/year) | Patent family member(s) | Publication date (day/month/year) |
|---|---|---|---|
| JP 2011-001397 A | 06 January 2011 | (Family: none) | |
| JP 02-001718 A | 08 January 1990 | US 4929667 A<br>column 7, lines 16-20, table 1<br>EP 327031 A2 | |
| JP 2007-009101 A | 18 January 2007 | (Family: none) | |
| JP 2020-515679 A | 28 May 2020 | US 2021/0130647 A1<br>entire text<br>WO 2018/177466 A1<br>EP 3601393 A1<br>CN 110691801 A | |
| WO 2015/111709 A1 | 30 July 2015 | CN 105960441 A | |
| WO 2022/144200 A1 | 07 July 2022 | EP 4056616 A1<br>entire text<br>CN 114686081 A | |
| US 2021/0277277 A1 | 09 September 2021 | WO 2020/016292 A1<br>entire text<br>EP 3626755 A1<br>CN 110734693 A | |
| JP 2013-523972 A | 17 June 2013 | US 2013/0203934 A1<br>entire text<br>EP 2556126 A1<br>CN 102834474 A<br>KR 10-2013-0040810 A | |
| US 2011/0288217 A1 | 24 November 2011 | WO 2010/089033 A1<br>entire text<br>EP 2393860 A1<br>CN 102300893 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023001167 A
- JP 2023001168 A
- JP 2023106875 A
- JP 3043472 A
- WO 2018163959 A
- JP 512 A